# EUROPEAN PATENT APPLICATION

(11) **EP 4 772 311 A1**
(43) Date of publication of application: **08.07.2026**
(21) Application number: 24913698.7
(22) Date of filing: 27.12.2024
(51) Int. Cl.: B25J 9/16, B25J 5/00, B25J 13/08, B25J 19/02, G01S 17/89, G06T 19/00, G06T 19/20

(54) **METHOD FOR UPDATING RECOGNITION MODEL OF ROBOT-TYPE MOBILE DEVICE AND ELECTRONIC DEVICE FOR PERFORMING SAME**

(30) Priority: 29.12.2023 KR 20230197637; 11.01.2024 KR 20240004864
(71) Applicant: Samsung Electronics Co., Ltd., Suwon-si, Gyeonggi-do 16677 (KR)
(72) Inventor: KIM, Myungsin, Suwon-si, Gyeonggi-do 16677 (KR); KIM, Jaehong, Suwon-si, Gyeonggi-do 16677 (KR); HO, Jonghyun, Suwon-si, Gyeonggi-do 16677 (KR)
(74) Representative: Gulde & Partner
(86) International application number: PCT/KR2024/021316
(87) International publication number: WO 2025/143894

(57) **Abstract**

A method of updating a recognition model of a robotic mobile device, the method including: obtaining, by an electronic device, from the robotic mobile device, spatial scan data regarding a target space; obtaining, by the electronic device, based on the spatial scan data, spatial information including information about a structure of the target space and an item in the target space; obtaining, by the electronic device, virtual object data including information about a class of a virtual object and a position of the virtual object by inputting the spatial information to a generative model; obtaining, by the electronic device, training data by using the spatial information and the virtual object data; and updating, by the electronic device, the recognition model of the robotic mobile device using the training data.

## Description

### Technical Field

The disclosure relates to a method of updating a recognition model of a robotic mobile device and an electronic device for performing the method.

### Background Art

Neural network models for object recognition (hereinafter referred to as "recognition models") are widely used in electronic devices commonly employed in daily life. For example, electronic devices that perform operations while moving within a specific space (e.g., a house), such as a robot vacuum cleaner, may recognize surrounding objects by using recognition models and perform operations according to recognition results.

The recognition performance of a recognition model may be affected by a type or class of an object being recognized or the surrounding environment (e.g., the structure of a space, brightness of the space, nearby items, etc.). Therefore, the recognition performance of a recognition model may vary with a space in which the recognition model is used.

### Disclosure of Invention

### Solution to Problem

According to an aspect of the disclosure, a method of updating a recognition model of a robotic mobile device includes: obtaining, by an electronic device, from the robotic mobile device, spatial scan data regarding a target space; obtaining, by the electronic device, based on the spatial scan data, spatial information including information about a structure of the target space and an item in the target space; obtaining, by the electronic device, virtual object data including information about a class of a virtual object and a position of the virtual object by inputting the spatial information to a generative model; obtaining, by the electronic device, training data by using the spatial information and the virtual object data; and updating, by the electronic device, the recognition model of the robotic mobile device using the training data.

According to an aspect of the disclosure, an electronic device for updating a recognition model of a robotic mobile device includes: memory storing a program or at least one instruction; and at least one processor configured to execute the program or the at least one instruction, wherein the program or the at least one instruction, when executed by the at least one processor, causes the electronic device to: obtain spatial scan data regarding a target space from the robotic mobile device, obtain, based on the spatial scan data, spatial information including information about a structure of the target space and an item in the target space, obtain virtual object data including information about a class of a virtual object and a position of the virtual object by inputting the spatial information to a generative model, obtain training data by using the spatial information and the virtual object data, and update the recognition model of the robotic mobile device using the training data.

### Brief Description Of Drawings

The above and other aspects and features of certain embodiments of the present disclosure will be more apparent from the following description taken in conjunction with the accompanying drawings, in which:
FIG. 1 is a diagram illustrating a system environment for updating a recognition model of a robotic mobile device, according to an embodiment of the disclosure;
FIG. 2 is a diagram illustrating hardware components included in a server, according to an embodiment of the disclosure;
FIG. 3 is a diagram illustrating components included in a robot vacuum cleaner, according to an embodiment of the disclosure;
FIG. 4 is a diagram illustrating detailed components, differentiated based on their functions or roles, of a server, according to an embodiment of the disclosure;
FIG. 5 is a diagram illustrating an operation in which a robotic mobile device transmits failure log data to a server, according to an embodiment of the disclosure;
FIG. 6 is a diagram illustrating a process of performing training and inference in a virtual object generation model of a server, according to an embodiment of the disclosure:
FIG. 7 is a diagram illustrating an example of training data used to train a virtual object generation model included in a server, according to an embodiment of the disclosure;
FIG. 8 is a diagram illustrating an operation in which a robotic mobile device obtains spatial scan data regarding a target space and transmit the spatial scan data to a server, according to an embodiment of the disclosure;
FIG. 9 is a diagram illustrating a method, performed by a server, of generating a virtual space, according to an embodiment of the disclosure;
FIG. 10 is a diagram illustrating a process in which a virtual object generation model generate a virtual object, according to an embodiment of the disclosure;
FIG. 11 is a diagram illustrating an operation in which a server augments a virtual object in a virtual space and generates training data through simulation, according to an embodiment of the disclosure;
FIG. 12 is a diagram illustrating an operation in which a server performs fine-tuning on a recognition model by using training data and updates the recognition model of a robotic mobile device according to a fine-tuning result, according to an embodiment of the disclosure; and
FIGS. 13, 14, 15, 16, 17 and 18 are flowcharts illustrating a method of updating a recognition model of a robotic mobile device, according to an embodiment of the disclosure.

### Mode for the Invention

Throughout the disclosure, the expression "at least one of a, b or c" indicates any of only a, only b, only c, both a and b, both a and c, both b and c, or all of a, b, and c.

In describing the disclosure, descriptions of technical ideas that are well known in a technical field to which the disclosure pertains and are not directly related to the disclosure will be omitted. This is to more clearly convey the essence of the disclosure without obscuring it by omitting unnecessary descriptions. Furthermore, the terms used hereinafter are defined by taking into account functions described in the disclosure and may be changed according to a user's or operator's intent, practices, or the like. Therefore, definition of the terms should be made based on the overall description of the disclosure.

For the same reason, in the accompanying drawings, some components are exaggerated, omitted, or schematically illustrated. Also, the size of each component does not entirely reflect the actual size. In the drawings, like reference numerals refer to the same or corresponding elements throughout.

Advantages and features of the disclosure and methods of accomplishing the same will be more readily appreciated by referring to the following description of one or more embodiments of the disclosure and the accompanying drawings. However, the disclosure may be embodied in many different forms and should not be construed as being limited to the embodiments of the disclosure set forth below. Rather, the one or more embodiments of the disclosure are provided so that the disclosure will be made thorough and complete and will fully convey the scope of the disclosure to those of ordinary skill in the art to which the disclosure pertains. An embodiment of the disclosure may be defined by the appended claims. Throughout the specification, like reference numerals refer to like elements. Furthermore, in the following description of the disclosure, related functions or configurations will not be described in detail when it is determined that they would obscure the essence of the disclosure with unnecessary detail. Furthermore, the terms used hereinafter are defined by taking functions described in the disclosure into account and may be changed according to a user's or operator's intent, practices, or the like. Therefore, definition of the terms should be made based on the overall description of the disclosure.

In an embodiment of the disclosure, each block in flowchart illustrations and combinations of blocks in the flowchart illustrations may be performed by computer program instructions. These computer program instructions may be loaded into a processor of a general-purpose computer, a special-purpose computer, or other programmable data processing equipment, and the instructions executed by the processor of the computer or the other programmable data processing equipment may generate a unit for performing functions specified in the flowchart block(s). The computer program instructions may also be stored in a computer-executable or computer-readable memory capable of directing the computer or the other programmable data processing equipment to implement functions in a specific manner, and the instructions stored in the computer-executable or computer-readable memory are capable of producing an article of manufacture including instructions for performing the functions specified in the flowchart block(s). The computer program instructions may also be loaded into the computer or the other programmable data processing equipment.

In addition, each block of a flowchart may represent a module, segment, or portion of code that includes one or more executable instructions for executing specified logical function(s). In an embodiment of the disclosure, functions mentioned in blocks may occur out of order. For example, two blocks illustrated in succession may be executed substantially simultaneously, or the blocks may sometimes be executed in reverse order depending on functions corresponding thereto.

As used in an embodiment of the disclosure, the term "unit" refers to a software element or a hardware element such as a field-programmable gate array (FPGA) or an application-specific integrated circuit (ASIC), and may perform a predetermined function. However, the term "unit" is not limited to software or hardware. The "unit" may be configured to be in an addressable storage medium or configured to operate one or more processors. In an embodiment of the disclosure, the term "unit" may include elements such as software elements, object-oriented software elements, class elements, and task elements, processes, functions, attributes, procedures, subroutines, segments of program code, drivers, firmware, micro-codes, circuits, data, a database, data structures, tables, arrays, and parameters. Functions provided by a specific element or a specific unit may be combined to reduce the number of elements or may be further divided into additional elements. In addition, in an embodiment of the disclosure, a "unit" may include one or more processors.

Hereinafter, the meaning of the terms used herein is described.

The term "robotic mobile device" may refer to any type of device that moves automatically or according to a user's control to perform various operations. A robotic mobile device as described in the disclosure may capture an image of a surrounding environment in order to perform an operation, recognize an object included in the captured image, and perform an operation based on a result of the object recognition. Therefore, a robotic mobile device may be equipped with a neural network model (a recognition model) for object recognition. While the disclosure is described with respect to a robot vacuum cleaner as a representative example of a robotic mobile device, a method of training a neural network model (recognition model) and the neural network model trained using the method, according to one or more embodiments of the disclosure are not limited to a robot vacuum cleaner and may be used for various other types of robotic mobile devices. In addition, the method of training a neural network model and the neural network model trained using the method, according to one or more embodiments of the disclosure, may be used by certain types of devices, other than the robotic mobile device. Terms such as a "robotic apparatus" and an "automatic driving apparatus" may be used instead of a "robotic mobile device".

As used herein, a "recognition model" may refer to a neural network model for recognizing objects included in an image or video. In the disclosure, a robotic mobile device can recognize an object in front of it by using a recognition model and control its driving according to a result of the recognition. In one or more embodiments of the disclosure, a recognition model may be fine-tuned to increase recognition performance in a specific space (a space of a specific user). Terms such as an "object recognition model" and an "object detection model" may also be used instead of a "recognition model".

"Spatial scan data" may refer to data obtained by a robotic mobile device scanning a space with sensors. According to an embodiment of the disclosure, a robotic mobile device may scan a space by using a light detection and ranging (LiDAR) sensor and a camera, and as a result, spatial scan data may include map data (e.g. LiDAR scan data) and a captured image. Depending on the type of a sensor installed on the robotic mobile device, spatial scan data may include different types of data. According to an embodiment of the disclosure, a server may obtain spatial information and illuminance characteristic information as described below by analyzing the spatial scan data received from the robotic mobile device. Terms such as "scan data" may be used instead of "spatial scan data".

As used herein, "spatial information" is information about a layout of a space and may include information about a structure of the space (e.g., a location of walls, etc.) and information about items (e.g., home appliances, furniture, etc.) arranged in the space (e.g., classes and positions of the items). Also, the spatial information may additionally include information about a background of the space (e.g., patterns, textures, color feeling, color distribution, and tones (white tone, wood tone, etc.) of the floor or wallpaper). According to an embodiment of the disclosure, the robotic mobile device or server may generate a "spatial map" via simultaneous localization and mapping (SLAM), and the spatial map may include spatial information. Terms such as "spatial layout" and "layout information" may be used instead of "spatial information". Furthermore, terms such as "map data" and "LiDAR map" may be used instead of a "spatial map".

As used herein, "illuminance characteristic information" may refer to information about the characteristics of illuminance generated by lighting or natural light in a space. That is, the illuminance characteristic information may include various types of information related to the brightness and color temperature of a plurality of regions included in the space. For example, the illuminance characteristic information may include information about variation of brightness and color temperature by region within the space and by time. According to an embodiment of the disclosure, captured images of a plurality of regions included in a specific space may each include illuminance characteristic information. Each of the captured images may indicate a brightness level (how bright the captured region was at the time of capturing). Furthermore, each of the captured images may further include metadata corresponding to the illuminance characteristic information. According to an embodiment of the disclosure, a spatial map for the specific space may also include illuminance characteristic information. For example, information such as average illuminance may be recorded for each of a plurality of regions included in the spatial map. The illuminance characteristics of a space may be affected by a structure of the space (e.g. locations of windows and lighting, arrangement of items, etc.). According to an embodiment of the disclosure, the server may obtain illuminance characteristic information about a space by analyzing a captured image of the space. Terms such as "brightness information" and "illuminance information" may also be used instead of "illuminance characteristic information".

As used herein, "failure log data" may refer to log data about failure events that occurred while the robotic mobile device was traveling and operating within a space. In this case, a "failure event" or "failure" may refer to a situation in which a problem occurs with the traveling or operation of the robotic mobile device because the robotic mobile device fails to recognize an object. Also, the "failure event" or "failure" may refer to a situation in which the robotic mobile device fails to recognize an object. Failure events may be of various types, such as getting caught on a cable, failure to avoid feces, etc. The failure log data may include information about the type and location of a failure event, and may further include spatial information (e.g. a spatial map obtained via SLAM) and captured images of the failure event (e.g. an image taken 5 seconds before occurrence of the failure event, an image taken at the time of occurrence of the failure event, etc.). Thus, the failure log data may include information about where in the space and what type of failure (fault) occurred. Terms such as "failure log", "failure event log data", "fault log", or "failure situation information" may also be used instead of "failure log data".

"Generative artificial intelligence (AI)" may refer to a type of AI technology capable of generating new text, images, etc. in response to input data (e.g. text, images, etc.). A representative example of generative Al is described in the description of "generative model" below.

A "generative model" may refer to a neural network model that implements a generative Al technology. The generative model is capable of generating new data having similar characteristics to input data or new data corresponding to the input data by learning patterns and structures in training data. For example, when the input data is text containing a question, the generative model may generate and output an answer to the question. Alternatively, for example, when the input data is text containing a request, the generative model may output text or images generated in response to the request. A "virtual object generation model", as described below, corresponds to a generative model. Instead of a "generative model," terms such as "generative Al model" may be used.

As used herein, "virtual space data" may refer to data representing a virtual space (e.g. three-dimensional (3D) modeling data). According to an embodiment of the disclosure, the server may generate a virtual space by reflecting the characteristics of a real-world space (e.g. layout and illuminance characteristics of the space). That is, the server can generate virtual space data based on spatial information about a specific space and illuminance characteristic information of the specific space. A virtual space may be a base space for generating training data that is used to train a recognition model. According to an embodiment of the disclosure, the server can provide realistic and diverse variations to the space by generating the virtual space as a 3D space, and as a result, obtain a large amount of training data. Terms such as "simulation space data" may also be used instead of "virtual space data".

As used herein, a "virtual object generation model" may refer to a generative AI model that generates, based on characteristics of a space, a virtual object that may be arranged in the space. When receiving spatial information about a specific space as input, the virtual object generation model may determine a virtual object that is likely to be arranged in the space based on the spatial information, and generate and output data about the determined virtual object. Alternatively, when receiving spatial information about a specific space as input, the virtual object generation model may determine a virtual object that is likely to cause a failure event in the space based on the spatial information, and generate and output data about the determined virtual object. According to an embodiment of the disclosure, the virtual object generation model may generate and output data about a virtual object (e.g., a class and a position of the virtual object) that is likely to be arranged in a specific space, based on context, such as a structure of the specific space and arrangement of items in the specific space. The virtual object generated by the virtual object generation model may be augmented in the virtual space described above. Instead of "virtual object generation model", terms such as "failure environment generation model", "failure case generation model", "dangerous object generation model", "failure-causing object generation model", "failure likelihood generation model", "difficulty generation model", "generative Al model", "generative model", "neural network model", or the like may also be used.

As used herein, "virtual object data" may refer to data including information about a class and a location of a virtual object. According to an embodiment of the disclosure, a virtual object may be an object that the robotic mobile device needs to avoid or pay attention to while traveling or performing an operation. Alternatively, according to an embodiment of the disclosure, a virtual object may refer to an object that is likely to cause failure in the traveling or operation of the robotic mobile device. According to an embodiment of the disclosure, the virtual object data may further include context information, which is information about items (items related to the virtual object) that are more likely to be located in a vicinity of the virtual object. For example, when a virtual object is a "cable", context information of the virtual object may be "home appliance" and "computer", which means that the virtual object that is a "cable" is highly likely to be arranged near a "home appliance" or "computer". According to an embodiment of the disclosure, the server may create a virtual space environment for obtaining training data by augmenting a virtual object in the virtual space based on virtual space data and virtual object data. The terms "dangerous object data", "failure-causing object data", "failure environment data", or "difficulty information/obstacle information" may also be used instead of "virtual object data".

"Training data" may refer to data for training a recognition model. According to an embodiment of the disclosure, training data is data for performing supervised learning on a recognition model, and may consist of a pair of an image containing an object and a label indicating a class of the object contained in the image. According to an embodiment of the disclosure, the training data may include "real data" and "synthetic data". Synthetic data may refer to virtual data that has similar statistical characteristics to real data and is generated by reproducing results similar to results of analyzing the real data. According to an embodiment of the disclosure, synthetic data may include data obtained in the virtual space environment described above (e.g. a virtually captured image of the virtual space where a virtual object is placed). Terms such as "synthetic image", "virtual data", or "virtual recognition data" may also be used instead of "synthetic data". Furthermore, terms such as "learning data" or "recognition data" may be used instead of "training data".

Hereinafter, one or more embodiments of the disclosure are described in detail with reference to the drawings.

The disclosure relates to a method of updating a recognition model embedded in a robotic mobile device, and in particular, to a method of updating a recognition model to have a high recognition performance in a specific space. To this end, in one or more embodiments of the disclosure, training data may be generated using a virtual space similar to a real-world space and a virtual object that is highly likely to cause recognition failure in the real-world space, and the recognition model may be trained using the generated training data.

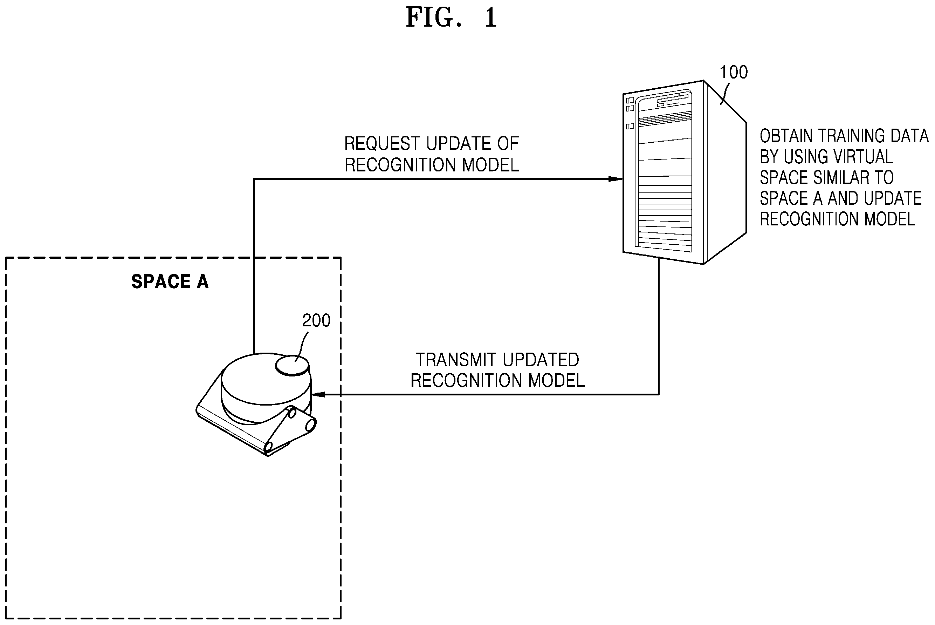

FIG. 1 is a diagram illustrating a system environment for updating a recognition model of a robotic mobile device, according to an embodiment of the disclosure. Referring to FIG. 1, a system according to an embodiment of the disclosure may include a server 100 and a robot vacuum cleaner 200. As described above, one or more embodiments of the disclosure may be applied to various types of robotic mobile devices other than the robot vacuum cleaner 200.

As shown in FIG. 1, it is assumed that the robot vacuum cleaner 200 operates in space A. For example, the space A may be a home of a user who uses the robot vacuum cleaner 200. The space A may be referred to as a target space, and the server 100 may update a recognition model of the robot vacuum cleaner 200 to be optimized for the target space.

The server 100 may be an electronic device of various types having computational functions. According to an embodiment of the disclosure, the server 100 may be an Internet of Things (IoT) server for controlling the robot vacuum cleaner 200 or providing services associated with the robot vacuum cleaner 200.

When the robot vacuum cleaner 200 requests the server 100 to update the recognition model, the server 100 may update the recognition model and transmit the updated recognition model to the robot vacuum cleaner 200. In detail, the server 100 may store a recognition model (e.g., a recognition model that is the same as the recognition model in the robot vacuum cleaner 200, or a base recognition model), and the server 100 may update the recognition model by performing fine-tuning on the stored recognition model, and then transmit parameter information of the updated recognition model to the robot vacuum cleaner 200. Alternatively, according to an embodiment of the disclosure, the server 100 may transmit training data to the robot vacuum cleaner 200, and the robot vacuum cleaner 200 may update the recognition model by using the received training data.

The server 100 may update the recognition model of the robot vacuum cleaner 200 to have high recognition performance when the robot vacuum cleaner 200 is used in the space A. To achieve this, the server 100 may obtain training data by using a virtual space similar to the space A, and update the recognition model by using the obtained training data. The server 100 may use a generative model to generate a virtual object that the recognition model is highly likely to fail to recognize, and use the generated virtual object when obtaining the training data. A purpose and a reason for the server 100 updating the recognition model of the robot vacuum cleaner 200 is described in detail as follows.

The robot vacuum cleaner 200 may identify an object located in front of it by performing object recognition on an image captured by a camera provided in the robot vacuum cleaner 200, and determine whether to remove the object or travel while avoiding the object depending on a class of the identified object. The robot vacuum cleaner 200 may include a neural network model for object recognition, i.e., a recognition model, in order to recognize the object included in the captured image. However, when the recognition performance (recognition accuracy) of the recognition model provided in the robot vacuum cleaner 200 is low, problems may occur wherein the robot vacuum cleaner incorrectly recognizes an object and does not avoid the object while traveling when required to avoid it. For example, the robot vacuum cleaner 200 may fail to recognize a cable on the floor and get caught on the cable while traveling, or the robot vacuum cleaner 200 may fail to avoid a pet dog's feces while traveling due to its failure to recognize the feces. In this way, a situation in which the recognition model of the robot vacuum cleaner 200 fails to recognize an object, causing a problem with the traveling or operation of the robot vacuum cleaner 200, may be referred to as a "failure event". Additionally, a "failure event" may refer to a situation in which the recognition model of the robot vacuum cleaner 200 fails to recognize an object.

The recognition performance of the recognition model in the robot vacuum cleaner 200 may be affected by a class of an object being recognized or a surrounding environment (e.g., a structure of a space, brightness of the space, nearby items, a background of the space, etc.), and thus, the recognition performance of the recognition model may vary depending on the space in which the robot vacuum cleaner 200 is used.

In general, a recognition model that is loaded on the robot vacuum cleaner 200 at the factory is a model that is commonly loaded on all robot vacuum cleaners, and is highly likely to be a recognition model that is not optimized for a specific space. Therefore, when the robot vacuum cleaner 200 is used in the specific space, the recognition performance of the recognition model may not be as high as expected.

To address this problem, the recognition model needs to be further trained to be specialized for a space (e.g., a user's home) where the robot vacuum cleaner 200 is used, and when training data is collected by capturing images of the space while the object is placed in the space, it is difficult to obtain a sufficient amount of data for training.

In one or more embodiments of the disclosure, the server 100 may obtain a sufficient amount of training data by collecting training data by using a virtual space. In detail, the server 100 may generate a virtual space (e.g., a 3D space) by reflecting the characteristics of the space A where the robot vacuum cleaner 200 is used, generate a virtual object that the recognition model is highly likely to fail to recognize, and then obtain training data by using the generated virtual space and virtual object. A specific process by which the server 100 obtains training data and updates a recognition model is described in more detail below with reference to other drawings.

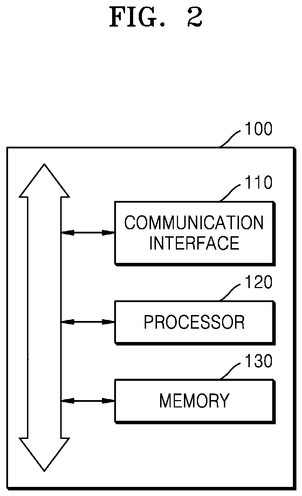

FIG. 2 is a diagram illustrating hardware components included in the server 100, according to an embodiment of the disclosure. Referring to FIG. 2, according to an embodiment of the disclosure, the server 100 may include a communication interface 110, a processor 120, and memory 130. However, the server 100 may include more or fewer components than the components described above. Some or all of the communication interface 110, the processor 120, and the memory 130 may be implemented in the form of a single chip.

The communication interface 110 is a component for transmitting and receiving signals (control commands, data, etc.) to and from an external device by wire or wirelessly, and may be implemented to include a communication chipset that supports various communication protocols. The communication interface 110 may receive a signal from the outside and output the signal to the processor 120, or may transmit a signal output from the processor 120 to the outside. The server 100 may communicate with the robot vacuum cleaner 200 via the communication interface 110.

The server 100 may receive a request to update a recognition model from the robot vacuum cleaner 200 via the communication interface 110 and transmit parameter information of the updated recognition model to the robot vacuum cleaner 200.

The processor 120 is a component that controls a series of processes to cause the server 100 to operate according to one or more embodiments of the disclosure as described below, and may be configured as one or more processors. The one or more processors included in the processor 120 may be circuitry, such as a system on chip (SoC), an integrated circuit (IC), or the like. The one or more processors included in the processor 120 may be general-purpose processors such as a central processing unit (CPU), a microprocessor unit (MPU), an application processor (AP), a digital signal processor (DSP), etc., dedicated graphics processors such as a graphics processing unit (GPU) and a vision processing unit (VPU), dedicated Al processors such as a neural processing unit (NPU), or dedicated communication processors such as a communication processor (CP). When the one or more processors included in the processor 120 are a dedicated Al processor, the corresponding AI dedicated processor may be designed with a hardware structure specialized for processing a specific AI model.

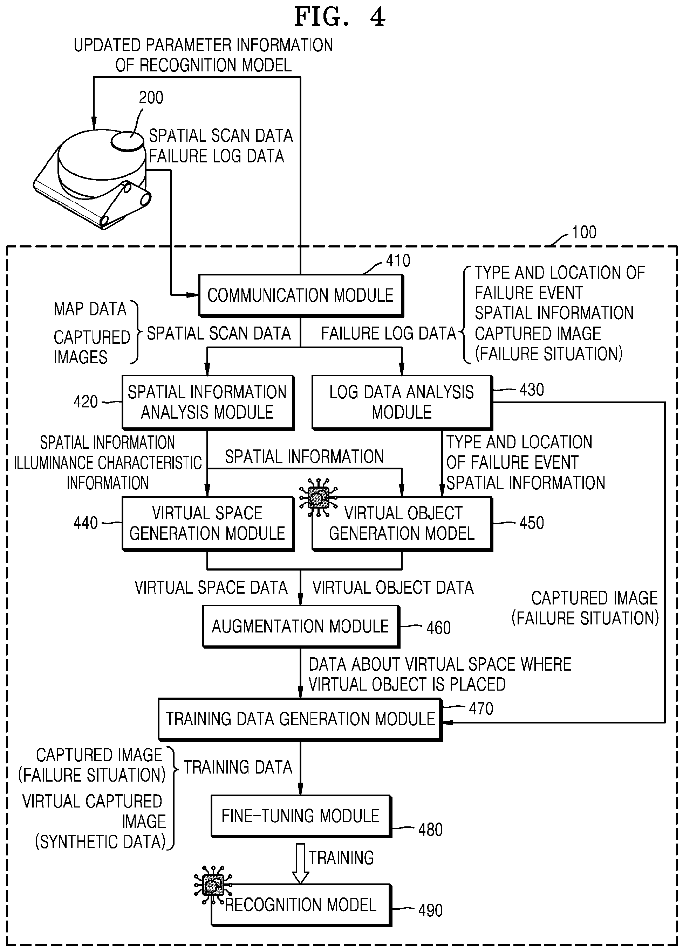

The processor 120 may write data to the memory 130 or read data stored in the memory 130, and in particular, execute a program or at least one instruction stored in the memory 130 to process data according to predefined operation rules or AI models. Thus, the processor 120 may perform operations according to one or more embodiments of the disclosure as described below. Operations described as being performed by the server 100 or detailed components (a communication module 410 to a recognition model 490 of FIG. 4) included in the server 100 in the one or more embodiments of the disclosure described below may be considered as being performed by the processor 120 unless otherwise specified.

The memory 130 is a component for storing various programs or data, and may consist of a storage medium, such as read-only memory (ROM), RAM, a hard disk, compact disc ROM (CD-ROM), and a digital video disc (DVD), or a combination of storage media. The memory 130 may not exist separately but may be configured to be included in the processor 120. The memory 130 may consist of volatile memory, non-volatile memory, or a combination of volatile memory and non-volatile memory. The memory 130 may store a program or at least one instruction for performing operations according to one or more embodiments of the disclosure as described below. The memory 130 may provide stored data to the processor 120 according to a request from the processor 120.

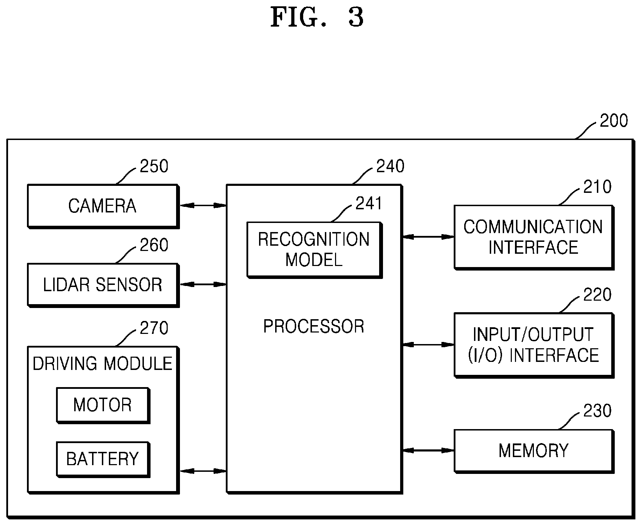

FIG. 3 is a diagram illustrating components included in the robot vacuum cleaner 200, according to an embodiment of the disclosure. Referring to FIG. 3, according to an embodiment of the disclosure, the robot vacuum cleaner 200 may include a communication interface 210, an input/output (I/O) interface 220, memory 230, a processor 240, a camera 250, a LiDAR sensor 260, and a driving module 270. However, the components of the robot vacuum cleaner 200 are not limited to the examples described above, and the robot vacuum cleaner 200 may include more or fewer components than the components described above. In an embodiment of the disclosure, some or all of the communication interface 210, the I/O interface 220, the memory 230, and the processor 240 may be implemented in the form of a single chip, and the processor 240 may include one or more processors.

The communication interface 210 is a component for transmitting and receiving signals (control commands, data, etc.) to and from an external device by wire or wirelessly, and may be configured to include a communication chipset that supports various communication protocols. The communication interface 210 may receive a signal from the outside and output the signal to the processor 240, or may transmit a signal output from the processor 240 to the outside. According to an embodiment of the disclosure, the robot vacuum cleaner 200 may transmit spatial scan data obtained using a camera 250 and a LiDAR sensor 260, as described below, to the server 100 via the communication interface 210.

The I/O interface 220 may include an input interface (e.g., a touch screen, hard buttons, a microphone, etc.) for receiving control commands or information from the user, and an output interface (e.g., a display panel, a speaker, etc.) for displaying results of execution of operations according to the user's control or a status of the robot vacuum cleaner 200.

The memory 230 is a component for storing various programs or data, and may consist of a storage medium, such as ROM, RAM, a hard disk, CD-ROM, and a DVD, or a combination of storage media. The memory 230 may not exist separately but may be configured to be included in the processor 240. The memory 230 may consist of volatile memory, non-volatile memory, or a combination of volatile memory and non-volatile memory. The memory 230 may store programs for performing operations according to one or more embodiments of the disclosure as described below. The memory 230 may provide stored data to the processor 240 according to a request from the processor 240.

The processor 240 is a component that controls a series of processes to cause the robot vacuum cleaner 200 to operate according to one or more embodiments of the disclosure as described below, and may be configured as one or more processors. In this case, the one or more processors may be general-purpose processors such as a CPU, an AP, a DSP, etc., dedicated graphics processors such as a GPU and a VPU, or dedicated AI processors such as an NPU. For example, when the one or more processors are a dedicated AI processor, the dedicated Al processor may be designed with a hardware structure specialized for processing a specific Al model.

The processor 240 may write data to the memory 230 or read data stored in the memory 230, and in particular, execute a program stored in the memory 230 to process data according to predefined operation rules or AI models. Thus, the processor 240 may perform operations according to one or more embodiments of the disclosure as described below, and the operations described as being performed by the robot vacuum cleaner 200 in the one or more embodiments of the disclosure as described below may be considered as being performed by the processor 240 unless otherwise specified.

While FIG. 3 illustrates the processor 240 as including a recognition model 241, the recognition model 241 may refer to a neural network model implemented by the processor 240 executing a program stored in the memory 230. The recognition model 241 may recognize an object included in an image captured via the camera 250. The processor 240 may update the recognition model 241 according to parameter information received from the server 100.

The camera 250 is a component for capturing images of the surroundings of the robot vacuum cleaner 200. The robot vacuum cleaner 200 may capture an image of a front side by using the camera 250 and recognize an object included in the captured image by using the recognition model 241.

The LiDAR sensor 260 is a component for scanning a distance (depth) to a wall or object in the surrounding space. The robot vacuum cleaner 200 may measure depth values for a plurality of regions included in the target space by using the LiDAR sensor 260 and transmit the measured depth values (LiDAR scan data) to the server 100.

The driving module 270 is a module for performing traveling or cleaning operation of the robot vacuum cleaner 200, and may include a motor and a battery. The motor is a component for providing power necessary for the robot vacuum cleaner 200 to perform cleaning operations. According to an embodiment of the disclosure, the robot vacuum cleaner 200 may move within the space and perform cleaning operations (e.g., sucking, etc.) due to a driving force provided by the motor. The battery may provide power to components included in the robot vacuum cleaner 200.

FIG. 4 is a diagram illustrating detailed components, differentiated based on their functions or roles, of the server 100, according to an embodiment of the disclosure. The detailed components, i.e., the communication module 410 to the recognition model 490, of the server 100 illustrated in FIG. 4 may be software components implemented by the processor 120 of the server 100 executing a program stored in the memory 130, or may also be virtual components for which no actual matching hardware devices exist. In other words, operations performed by the processor 120 of the server 100 by executing the program stored in the memory 130 may be classified into a plurality of groups according to function or purpose, and entities that perform the operations respectively included in the plurality of groups may be represented by the detailed components of FIG. 4, i.e., the communication module 410 to the recognition model 490. Accordingly, the operations described as being performed by the detailed components, i.e., the communication module 410 to the recognition model 490, illustrated in FIG. 4 may be considered as actually being performed by the processor 120 of the server 100 by executing the program stored in the memory 130. Hereinafter, one or more embodiments of the disclosure in which the server 100 updates the recognition model 241 of the robot vacuum cleaner 200 are described in detail with reference to FIGS. 4 to 11.

### 1. Collecting and transmitting failure log data

When a failure event occurs while performing cleaning in space A (target space), the robot vacuum cleaner 200 may store information related to the failure event as failure log data and transmit the failure log data to the server 100. In this case, as described above, the failure event may refer to both a situation in which the recognition model 241 of the robot vacuum cleaner 200 fails to recognize an object and a situation in which the cleaning operation of the robot vacuum cleaner 200 fails due to the failure in recognition.

The failure log data may include a type and a location of the failure event, spatial information (e.g., a spatial map obtained via SLAM), and captured images of the failure situation (e.g., an image captured a few seconds before occurrence of the failure event, an image captured at the time of occurrence of the failure event, etc.). In other words, the failure log data may include information about where and what type of failure occurred, a structure of a space where the failure occurred, what it looked like when the failure occurred, etc.

According to an embodiment of the disclosure, the robot vacuum cleaner 200 may store failure log data in the memory 230 and transmit the failure log data to the server 100 when a certain condition is met. For example, the robot vacuum cleaner 200 may transmit the failure log data to the server 100 when a failure event occurs a preset number of times or when a failure event occurs at a preset rate out of a total number of cleaning operations recently performed. Alternatively, for example, the robot vacuum cleaner 200 may periodically transmit failure log data to the server 100.

Referring to FIG. 4, when the robot vacuum cleaner 200 transmits the failure log data to the communication module 410 of the server 100, the communication module 410 may transmit the received failure log data to a log data analysis module 430. The log data analysis module 430 may analyze the failure log data and output pieces of information included in the failure log data.

### 2. Training a virtual object generation model by using failure log data

Among the pieces of information included in the failure log data, the type and location of a failure event and spatial information may be used to train a virtual object generation model 450. As described above, the virtual object generation model 450 is a generative Al model for generating virtual object data based on spatial information. The virtual object generation model 450 may learn a relationship between characteristics of a space (in particular, classes and positions of items arranged in the space) and an object (in particular, an object that is likely to cause a failure event). By training the virtual object generation model 450 based on information about where and what type of failure event actually occurred, the virtual object generation model 450 may generate data about a virtual object (e.g., a class and a position of the virtual object) that is highly likely to cause a failure event according to the characteristics of a space. In detail, when spatial information about a target space (e.g., a structure of the space, and classes and positions of items arranged in the space) and information about a failure event (a class and a position of an object that caused the failure event) are input to the virtual object generation model 450, the virtual object generation model 450 may add a new object that is likely to be arranged in the target space (in particular, an object that is likely to cause the failure event), and the new object added corresponds to a virtual object.

For example, it is assumed that a cable was laid on the floor in an environment with electronic devices nearby, but the recognition model 241 of the robot vacuum cleaner 200 failed to recognize the cable, resulting in a failure event where the robot vacuum cleaner 200 got caught on the cable, and the virtual object generation model 450 is trained using information about this failure event. In this case, when spatial information representing a similar environment (an environment where an electronic device is located) is input to the virtual object generation model 450, the virtual object generation model 450 may generate a cable laid around the electronic device as a virtual object.

Virtual object data output by the virtual object generation model 450 may include information about a class and a position of a virtual object. Furthermore, the virtual object data may further include context information that is information about nearby items related to the virtual object (items that are highly likely to be located in the vicinity of the virtual object).

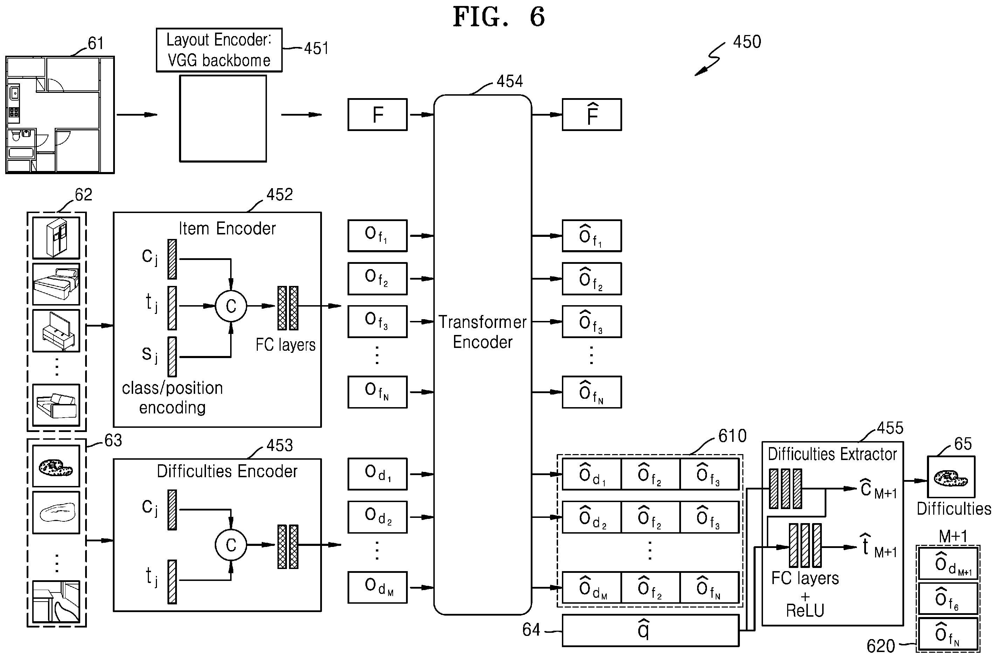

A specific method of training the virtual object generation model 450 by using failure log data is described in detail below with reference to FIG. 6.

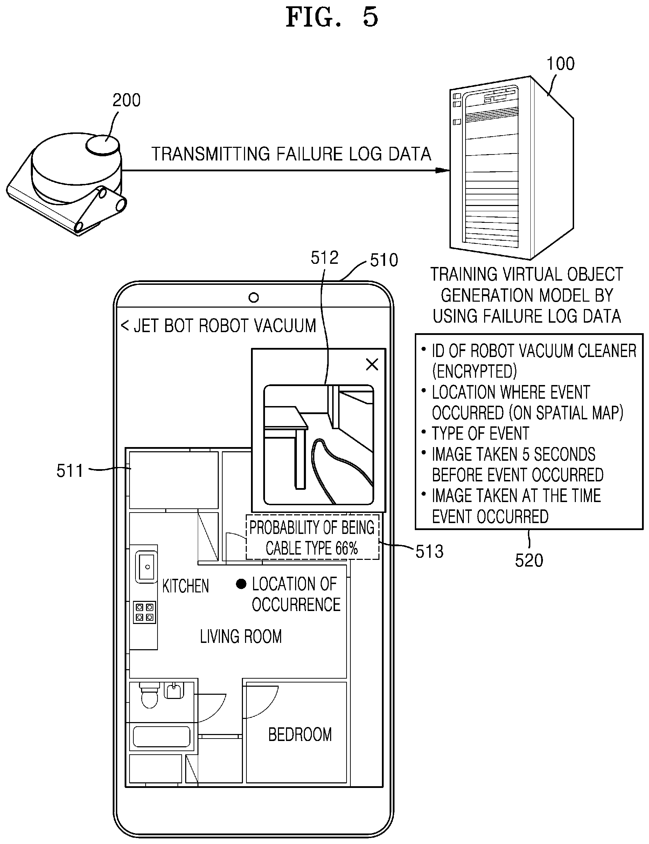

FIG. 5 is a diagram illustrating an operation in which a robotic mobile device transmits failure log data to a server, according to an embodiment of the disclosure. Referring to FIG. 5, when the robot vacuum cleaner 200 transmits failure log data to the server 100, the server 100 may train the virtual object generation model (450 of FIG. 4) by using the failure log data.

FIG. 5 illustrates a first screen 510 indicating a failure event and composition 520 of failure log data. According to an embodiment of the disclosure, when a failure event occurs in the robot vacuum cleaner 200, the first screen 510 is displayed on a user device (e.g., a smartphone) for controlling the robot vacuum cleaner 200, allowing the user to view information about the failure event that is currently occurring. A spatial map 511 for a target space (space A) may be displayed on the first screen 510, and a location where the failure event occurred may be displayed on the spatial map 511. In addition, the first screen 510 may display an image 512 captured of a situation in which the failure event occurred and information 513 about a class of an object that caused the failure event.

Referring to the composition 520 of the failure log data, the failure log data may include an identifier (ID) of the robot vacuum cleaner 200 for identifying the device in which a failure event occurred, a location where the failure event occurred (a location on a spatial map), a type of the failure event (e.g., getting caught on a cable, failure to avoid feces, etc.), spatial information (e.g., a spatial map obtained via SLAM), sample images captured of the failure event (e.g., an image taken 5 seconds before the failure event occurred, an image taken at the time the failure event occurred, etc.). According to an embodiment of the disclosure, the server 100 may receive failure log data not only from the robot vacuum cleaner 200 operating in space A, but also from various external sources (e.g., robot vacuum cleaners) used in other spaces. Thus, the server 100 may train the virtual object generation model 450 by using information about failure events that occurred in various spaces. As a result, the virtual object generation model 450 may sufficiently learn a relationship between characteristics of a space (e.g., a structure of the space, arrangement of items in the space, etc.) and an object that causes failure.

Moreover, as described below, captured images of a failure situation included in failure log data may also be used when generating training data for a recognition model. For example, the robot vacuum cleaner 200 may accurately identify a class of an object that caused a failure event via an additional recognition attempt after the failure event, and the server 100 may generate training data by labeling captured images included in failure log data with the class of the object.

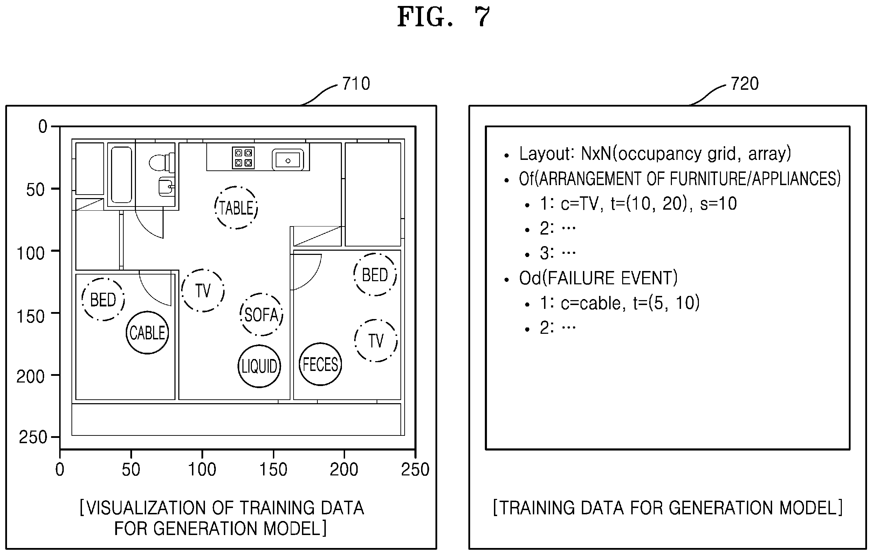

A specific method of training the virtual object generation model 450 by using failure log data is described in detail below with reference to FIGS. 6 and 7.

FIG. 6 is a diagram illustrating a process in which training and inference are performed in the virtual object generation model 450 included in the server 100, according to an embodiment of the disclosure. Referring to FIG. 6, the virtual object generation model 450 may include a layout encoder 451, an item encoder 452, a difficulties encoder 453, a transformer encoder 454, and a difficulties extractor 455.

The virtual object generation model 450 may be trained using spatial information about a target space and information about a type and a location of a failure event. According to an embodiment of the disclosure, when the spatial information about the target space and the information about the type and location of the failure event are input to the virtual object generation model 450, the virtual object generation model 450 may output information about a virtual object that is likely to cause the failure event (e.g., a class and a position of the virtual object and information about items in the vicinity of the virtual object).

Inputs to and outputs from detailed components, i.e., the layout encoder 451 to the difficulties extractor 455, included in the virtual object generation model 450 are described in detail. According to an embodiment of the disclosure, the virtual object generation model 450 may be implemented as a transformer encoder, and thus may be trained using an unsupervised learning technique. That is, the virtual object generation model 450 may be trained using a loss function that compares outputs of the layout encoder 451, the item encoder 452, and the difficulties encoder 453 with outputs of the transformer encoder 454, and a detailed description thereof is omitted herein.

The processor 120 of the server 100 may obtain an image 61 representing a structure of a target space from spatial information and input the obtained image 61 to the layout encoder 451. According to an embodiment of the disclosure, as illustrated in FIG. 6, the image 61 that is a two-dimensional (2D) top view image of the target space may be input to the layout encoder 451. In this case, a convolutional neural network (CNN) suitable for extracting features from an image may be used as the layout encoder 451. The layout encoder 451 may extract features from the image 61 representing the structure of the target space and output a feature vector.

The processor 120 of the server 100 may extract from the spatial information a vector representing the class cⱼ, location tⱼ, and size sⱼ of items 62 arranged in the target space, and input the vector to the item encoder 452. In this case, the position tⱼ of the items 62 may be coordinate information indicating positions on the image 61 that is a 2D top view image. In addition, in this case, the size sⱼ of the items 62 may be information indicating a size (e.g., a one-dimensional (1D) size) measured based on one direction. The item encoder 452 may output a feature vector for each of the items 62.

The processor 120 of the server 100 may extract a vector representing class cⱼ and location tⱼ of objects 63 that caused failures from information about the type and location of a failure event and input the vector to the difficulties encoder 453. In this case, the position tⱼ of the objects 63 that caused the failures may also be coordinate information indicating positions on the image 61 that is a 2D top view image. The difficulties encoder 453 may output a feature vector for each of the objects 63 that caused the failures. According to an embodiment of the disclosure, the processor 120 may allow the virtual object generation model 450 to be trained in an autoregressive manner by masking some of the feature vectors extracted from the objects 63 that caused the failures.

An example of input (training data) for training the virtual object generation model 450 is illustrated in FIG. 7. A first image 710 of FIG. 7 is an image obtained by visualizing data (training data) input to the virtual object generation model 450, and a second image 720 shows vectors input to the virtual object generation model 450.

The first image 710 shows items and objects that caused failure events on a 2D top view image representing the structure of the target space. An image from which the items and the objects that caused the failure events are removed from the first image 710 may be input to the layout encoder 451.

The second image 720 shows the vectors representing classes and positions of the items and the objects that caused the failure events, which are shown in the first image 710. The vectors shown in the second image 720 may be input to the item encoder 452 and the difficulties encoder 453.

When the feature vectors extracted from the layout encoder 451, the item encoder 452, and the difficulties encoder 453 are input to the transformer encoder 454, the transformer encoder 454 may output feature vectors similar to the input feature vectors. In particular, the transformer encoder 454 may output, for the objects 63 that caused the failures, feature vectors of items located in the vicinity thereof together with feature vectors for the objects 63, as seen in a first region 610, thereby learning a probability of placement of difficulties (the objects 63 that caused the failures) according to the arrangement of the items 62. As a result, a query vector 64, which is an output of the transformer encoder 454, may include feature vectors for items in the vicinity together with a feature vector for difficulties, similar to the vectors included in the first region 610. When the query vector 64 is passed through the difficulties extractor 455, information about a class and a position of a new virtual object (difficulties) 65 may be output, and as seen in a second region 620, a feature vector for the new virtual object 65 and feature vectors for items in the vicinity thereof may be output. That is, the output of the virtual object generation model 450 may include a class and a position of the new virtual object 65 and context information about the new virtual object 65.

### 3. Starting updating recognition model of robot vacuum cleaner

Methods of starting an update of the recognition model 241 of the robot vacuum cleaner 200 are described.

According to an embodiment of the disclosure, the robot vacuum cleaner 200 may ask the user whether to update the recognition model 241 upon initial startup or upon reset, and may start updating the recognition model 241 when the user agrees on the update. Alternatively, the robot vacuum cleaner 200 may automatically start updating the recognition model 241 upon initial startup or upon reset.

According to an embodiment of the disclosure, the robot vacuum cleaner 200 may start updating the recognition model 241 when the user requests an update of the recognition model 241 via the I/O interface 220.

According to an embodiment of the disclosure, when a failure event occurs, the robot vacuum cleaner 200 asks the user whether to update the recognition model 241, and when the user agrees on the update, start updating the recognition model 241. Alternatively, the robot vacuum cleaner 200 may automatically start updating the recognition model 241 when a failure event occurs. In detail, when a failure event occurs a preset number of times or when a failure event occurs at a preset rate out of the total number of cleaning operations recently performed, the robot vacuum cleaner 200 may transmit failure log data to the server 100 and then start updating the recognition model 241 automatically or with the user's consent.

In this way, when a preset condition is met, the robot vacuum cleaner 200 may start updating the recognition model 241 automatically or with the user's consent.

### 4. Collecting and transmitting spatial scan data

When the update of the recognition model 241 of the robot vacuum cleaner 200 starts, the robot vacuum cleaner 200 may collect spatial scan data by scanning the target space (space A) by using the sensors (the camera 250 and the LiDAR sensor 260) provided therein, and transmit the spatial scan data to the server 100. The spatial scan data may include map data (e.g., LiDAR scan data) collected via the LiDAR sensor 260 of the robot vacuum cleaner 200 and captured images obtained via the camera 250 (e.g., images captured of a plurality of regions within the target space in various environments (illuminance levels).

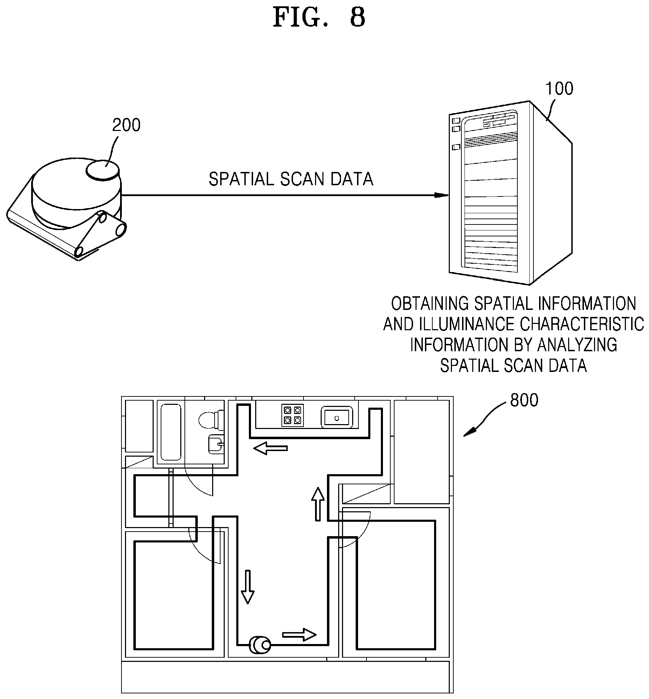

A method, performed by the robot vacuum cleaner 200, of obtaining spatial scan data regarding the target space (space A) is described in detail with reference to FIG. 8.

When there is a pre-generated spatial map 800, the robot vacuum cleaner 200 may set an optimal traveling path on the pre-generated spatial map 800 (e.g., setting a path by using a one-stroke drawing technique) and collect spatial scan data while traveling along the set traveling path. For example, the robot vacuum cleaner 200 may scan a depth of the space by using the LiDAR sensor 260 or capture images of the space by using the camera 250 at certain distances or at certain intervals while traveling along the travelling path. In this case, the captured images may be used later when the server 100 determines classes and positions of items arranged in the target space, analyzes illuminance characteristics of the target space, or analyzes the background of the target space (e.g., patterns, textures, color feeling, color distribution, and tones (white tone, wood tone, etc.) of the floor or wallpaper).

Even when there is no pre-generated spatial map 800, the robot vacuum cleaner 200 may collect spatial scan data while traveling around the target space. For example, upon initial startup, the robot vacuum cleaner 200 may travel around and scan the target space to generate a spatial map 800 for the target space, and the robot vacuum cleaner 200 may obtain spatial scan data during this process. In this case, because the robot vacuum cleaner 200 is not able to set a traveling path in advance, the robot vacuum cleaner 200 may collect spatial scan data while setting a traveling path in real time based on information sensed while traveling.

According to an embodiment of the disclosure, the robot vacuum cleaner 200 may automatically or upon a user's request collect additional spatial scan data while changing the environment of the target space (e.g., turning lights on and off, artificial placement of an object that may likely cause failure, etc.).

When the robot vacuum cleaner 200 transmits the spatial scan data collected according to the method described above to the server 100, the server 100 may obtain spatial information and illuminance characteristic information by analyzing the spatial scan data. When the communication module 410 of the server 100 transmits the received spatial scan data to a spatial information analysis module 420, the spatial information analysis module 420 may obtain spatial information and illuminance characteristic information regarding the target space (space A) by analyzing the spatial scan data. In detail, the spatial information analysis module 420 may obtain spatial information by analyzing the structure of the target space based on at least one of map data or a captured image, analyzing classes and positions of items arranged in the target space, and analyzing the background of the target space. In addition, the spatial information analysis module 420 may determine illuminance characteristics of the target space based on the captured image.

A method, performed by the spatial information analysis module 420, of obtaining illuminance characteristic information about the target space is described in detail as follows.

The spatial information analysis module 420 may determine a color temperature distribution and a brightness distribution in the target space by analyzing captured images included in the spatial scan data. According to an embodiment of the disclosure, the spatial information analysis module 420 may analyze colors based on red, green, and blue (RGB) distribution in a captured image, convert a color space of the captured image (e.g., convert it from an RGB color space to an International Commission on Illumination (CIE) lightness, red/green, yellow/blue (LAB) color space), and then analyze the brightness of the captured image. As a result, the spatial information analysis module 420 may obtain data regarding color temperature and brightness for each region of the target space. In addition, the spatial information analysis module 420 may obtain illuminance characteristic information about the target space by analyzing the captured images included in the spatial scan data in various other ways.

### 5. Generating training data (for training recognition model)

In order to train the recognition model 241 of the robot vacuum cleaner 200 to be optimized for the target space (space A), images of objects captured with various classes of objects (in particular, objects that are highly likely to cause failures) arranged in a plurality of regions in the space A are needed. However, it is difficult to obtain a sufficient amount of real data in the case of training a recognition model by using only real data, such as images of objects captured in the real-world space (e.g., images captured of failure events). It takes a lot of time to secure a large amount of real data, and there is a practical limit to the amount of data obtainable from a user's real-world space. Therefore, in one or more embodiments of the disclosure, the server 100 may generate a virtual space similar to the target space (space A), generate a virtual object that is highly likely to cause a failure event in the target space, and then use the virtual space and the virtual object to generate synthetic data for use in training the recognition model 241.

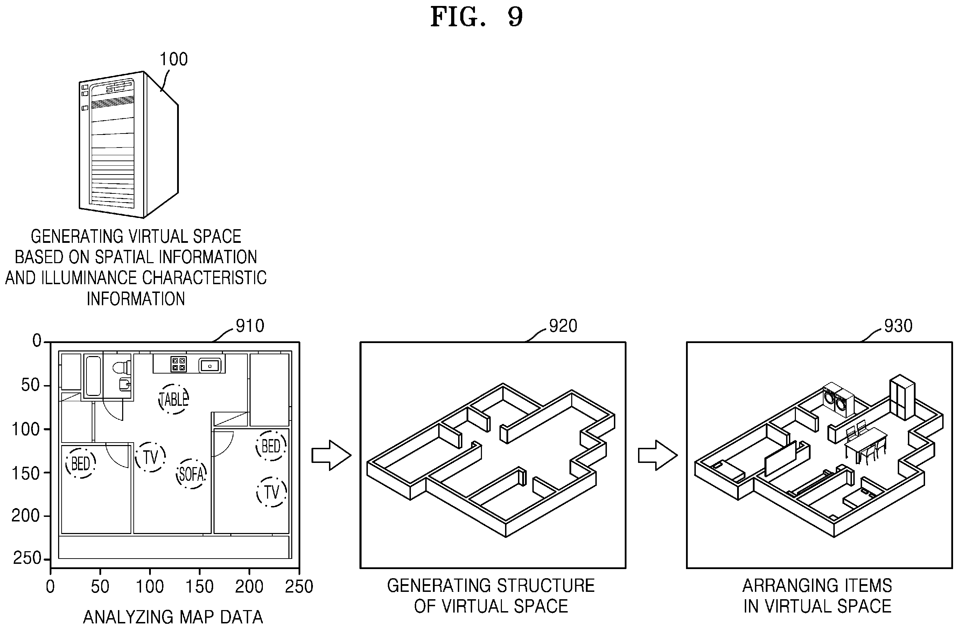

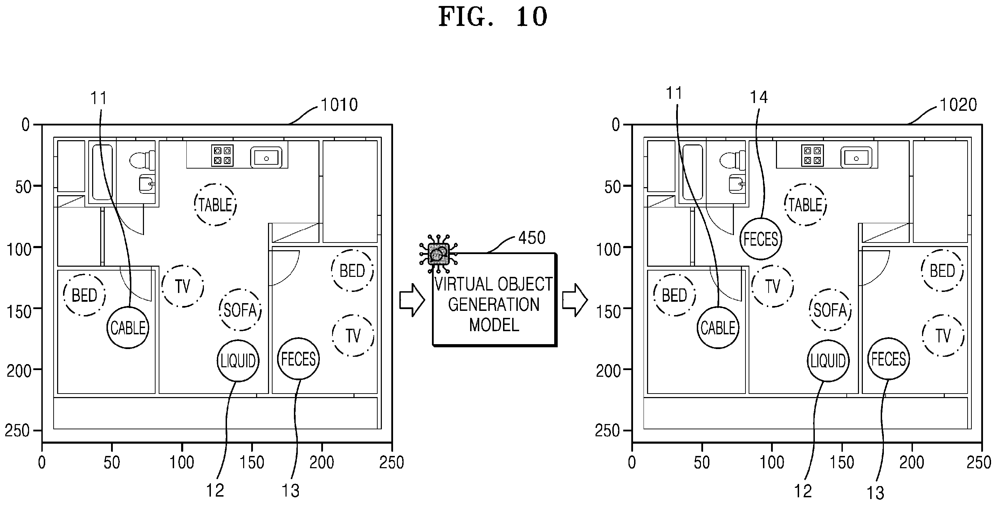

Hereinafter, a specific process in which the server 100 generates a virtual space and a virtual object and generates training data via simulation for the virtual space is described in detail with reference to FIGS. 9 and 10.

### (1) Generating a virtual space

As described above, the recognition performance of the recognition model 241 may be greatly affected by the structure of the space, the arrangement of items in the space, the background of the space, the color of the space according to a light source, the illuminance characteristics of the space, etc. Therefore, in order for the main factors affecting the recognition performance to be reflected in the training data similarly to the user's real-world space (space A), the server 100 may generate a virtual space based on spatial information about the user's space and illuminance characteristic information of the space.

FIG. 9 is a diagram illustrating a method, performed by the server 100, of generating a virtual space, according to an embodiment of the disclosure. Referring to FIG. 9, a virtual space generation module 440 of the server 100 may generate a virtual space based on the spatial information and illuminance characteristic information which are received from the spatial information analysis module 420.

A first image 910 of FIG. 9 may be an image obtained by visualizing the spatial information received by the virtual space generation module 440 as input. In other words, the first image 910 may be a result of visualizing the spatial information obtained by the spatial information analysis module 420 analyzing the map data included in the spatial scan data. The first image 910 shows an overall structure of the target space (space A) and classes and positions of items arranged in the target space. That is, the spatial information received by the virtual space generation module 440 as input may include information about the structure of the target space and information about the items arranged in the target space. In addition, the spatial information received by the virtual space generation module 440 may also include information about a background of the space (e.g. patterns, textures, color feeling, color distribution, and tones (white tone, wood tone, etc.) of the floor or wallpaper).

The spatial information input to the virtual space generation module 440 may be in the form of an image such as the first image 910, or may be in the form of text containing information about the structure of the target space and the arrangement of the items. In addition, the spatial information input to the virtual space generation module 440 may include information about the background of the space represented in the form of an image (e.g., a captured image of the floor or wallpaper).

The illuminance characteristic information input to the virtual space generation module 440 is a result obtained by the spatial information analysis module 420 analyzing the captured images included in the spatial scan data, and may be various types of data (e.g., images or text) representing a color temperature distribution and a brightness distribution in the target space. That is, the illuminance characteristic information input to the virtual space generation module 440 may be data representing color temperature and brightness for each of a plurality of regions included in the target space.

The virtual space generation module 440 may generate a virtual space based on the input spatial information and illuminance characteristic information and output virtual space data representing the generated virtual space. A second image 920 and a third image 930 of FIG. 9 are images obtained by visualizing a process in which the virtual space generation module 440 generates the virtual space.

Referring to the second image 920, the virtual space generation module 440 may generate a structure of the virtual space based on the input spatial information. As described above, the spatial information may include information about the structure of the target space. Thus, the virtual space generation module 440 may generate a structure of the virtual space by reflecting the structure of the target space. For example, the virtual space generation module 440 may generate a structure of the virtual space, which is identical to the structure of the target space. Alternatively, the virtual space generation module 440 may generate the structure of the virtual space by maintaining structural characteristics of the target space (e.g., a shape of the overall space structure, etc.) but varying the details.

According to an embodiment of the disclosure, the virtual space generation module 440 may generate the structure of the virtual space by using a realistic 3D model. In this way, when the virtual space is generated by using a realistic 3D model, there is an advantage in that various changes may be made to the characteristics of the space, the time of image capturing, or the like in the process of obtaining training data (synthetic data) through simulation.

Referring to the third image 930, the virtual space generation module 440 may arrange items in the virtual space with the determined structure. As described above, the spatial information may include information about the classes and positions of the items arranged in the target space. Accordingly, the virtual space generation module 440 may arrange items in the virtual space by reflecting the classes and positions of the items arranged in the target space. For example, the virtual space generation module 440 may arrange items in the virtual space in the same manner as in the target space. Alternatively, the virtual space generation module 440 may arrange items in the target space while maintaining characteristics of how the items are arranged in the target space (e.g., at least one room has a desk, and a desktop is placed on the desk), but varying the details.

Once the structure of the virtual space is generated and the arrangement of items in the virtual space is completed, the virtual space generation module 440 may adjust illuminance of the virtual space based on the illuminance characteristic information. Adjustment of illuminance for the virtual space may also be performed during a simulation process for generating training data as described below. According to an embodiment of the disclosure, the virtual space generation module 440 may determine a corresponding region of the target space for each of a plurality of regions included in the virtual space, and may apply color temperature and brightness of the corresponding region of the target space intactly to the virtual space, or adjust the color temperature and brightness of the region of the target space by a certain percentage (e.g., 20 % to 50 %) and apply a result of the adjustment to the virtual space.

The virtual space generation module 440 may adjust a background of the virtual space by reflecting information about the background of the target space included in the spatial information. For example, the virtual space generation module 440 may generate patterns and textures of a floor or wallpaper in the virtual space, which are the same as or similar to those in the target space.

As a result, the virtual space generation module 440 may generate a virtual space by applying the same layout as that of the target space that may be determined from the spatial information, or generate a virtual space with slightly modified structure or arrangement of items while maintaining the characteristics of the layout of the target space (e.g., a lot of furniture arranged in the living room, a wood pattern on the floor, etc.). Furthermore, the virtual space generation module 440 may apply various illuminance changes to the virtual space based on the illuminance characteristic information. In addition, the virtual space generation module 440 may adjust the background of the virtual space based on information about the background of the target space.

As described above, the server 100 generates the virtual space based on the spatial information of the real-world target space, so realistic synthetic data may be generated and used as training data.

### (2) Generating a virtual object

As described above, the virtual object generation model 450 may learn a relationship between the characteristics of the space (e.g., the structure of the space, arrangement of items in the space, etc.) and an object that causes failure. Thus, when the spatial information about the target space (e.g., a structure of the space, and classes and positions of items arranged in the space) and information about a failure event (a class and a position of an object that caused the failure event) are input to the virtual object generation model 450, the virtual object generation model 450 may generate a new object (a virtual object) that is likely to cause failure in the target space. In other words, the virtual object generation model 450 may generate and output data about a virtual object that may likely cause a failure according to context, such as the structure of the target space and the arrangement of items in the target space. According to an embodiment of the disclosure, the virtual object may be an object for which a probability that the recognition model 241 of the robot vacuum cleaner 200 fails to recognize in the target space is greater than or equal to a preset threshold.

A process in which the virtual object generation model 450 generates a virtual object is described in detail with reference to FIG. 10. A first image 1010 of FIG. 10 is an image obtained by visualizing an input to the virtual object generation model 450. The first image 1010 shows the structure of the target space (space A) and the classes and positions of items arranged in the target space. Additionally, the first image 1010 shows classes and positions of objects 11, 12, and 13 that caused failure events. As shown in FIG. 4, the virtual object generation model 450 may take as input the spatial information of the target space output by the spatial information analysis module 420 and types and locations of failure events output by the log data analysis module 430.

As described above with reference to FIG. 6, the pieces of information included in the first image 1010 (the spatial information of the target space and the types and locations of the failure events) may be input to the virtual object generation model 450 in image form or in vector form. More specifically, the following three types of data may be input to the virtual object generation model 450.
1) A 2D top view image of the target space (an image obtained by removing the items and the objects 11, 12, and 13 that caused the failure events from the first image 1010)
2) A vector representing classes, positions (2D coordinate information), and sizes of the items (home appliances and furniture) shown in the first image 1010
3) A vector representing the classes and positions (2D coordinate information) of the objects 11, 12, and 13 that caused the failure events shown in the first image 1010

A second image 1020 of FIG. 10 is an image obtained by visualizing an output of the virtual object generation model 450. Unlike in the first image 1010, a new virtual object 14 is added to the second image 1020. The virtual object generation model 450 may learn a relationship between the objects 11, 12, and 13 that caused the failures and the structure of the space and the items (e.g., home appliances, furniture, etc.) arranged in the space, and may generate the new virtual object 14 based on a result of the learning and according to the context of the target space.

According to an embodiment of the disclosure, virtual object data actually output from the virtual object generation model 450 may include a class (feces) and a position (2D coordinate information) of the new object 14 that is a newly generated virtual object. In addition, the virtual object data may further include context information (e.g., indicating that feces are located around the TV), which is information about a nearby item related to the new virtual object 14. The second image 1020 of FIG. 10 corresponds to a result of adding the new virtual object 14 to the 2D top view image of the target space according to the virtual object data described above.

According to an embodiment of the disclosure, the position of the new virtual object 14 included in the virtual object data may be determined based on the context information included in the virtual object data. For example, the position of the virtual object 14 in the second image 1020 of FIG. 10 may be determined to be around the TV based on the context information indicating "feces are located around the TV."

In summary, when receiving spatial information about the target space and information about a failure event as input, the virtual object generation model 450 may generate virtual object data (class and position of a virtual object, and context information).

That is, the virtual object generation model 450 may understand which situation is highly likely to cause a failure and create a similar situation (a situation in which a specific class of virtual object is placed around specific items in the space).

In other words, based on the structure of the target space and the arrangement of items (e.g., home appliances and furniture) within the target space, the virtual object generation model 450 may learn to understand what class of object and where the object is highly likely to be placed in the target space, and furthermore, where a specific class of object is placed in the target space when the recognition model 241 is highly likely to fail to recognize the object, and generate a virtual object accordingly.

### (3) Augmenting a virtual object in a virtual space

An augmentation module 460 may augment, based on the virtual space data and virtual object data, a virtual object in a certain area within the virtual space.

As described above, the virtual object data may include information about a position of the virtual object, and the position of the virtual object may be represented by coordinate information on a 2D top view image of the target space. Furthermore, as described above, the virtual space generation module 440 may generate a structure of the virtual space, which is identical or similar to the structure of the target space. Therefore, according to an embodiment of the disclosure, the augmentation module 460 may identify a position in the virtual space, which corresponds to a position on the 2D top view image of the target space, and place the virtual object at the identified position. For example, the augmentation module 460 may identify a position in the virtual space corresponding to the position of the virtual object 14 on the second image 1020 of FIG. 10, and place the virtual object (feces) at the identified position.

As described above, the virtual object data may include context information, which is information about items that are likely to be located in the vicinity of the virtual object. Furthermore, as described above, the virtual space generation module 440 may arrange items in the virtual space by reflecting the classes and positions of the items arranged in the target space. Therefore, according to an embodiment of the disclosure, the augmentation module 460 may determine a position in the virtual space where the virtual object is to be placed, based on the items arranged in the virtual space and the context information included in the virtual object data. In other words, the augmentation module 460 may determine items to be located in the vicinity of the virtual object among the items arranged in the virtual space according to the context information, and arrange the virtual object in the vicinity of the determined items. For example, when a class of the virtual object generated is "cable" and the context information is "desk and computer", the augmentation module 460 may place the virtual object (cable) in the vicinity of a location where the desk and computer are arranged in the virtual space.

In summary, according to an embodiment of the disclosure, the augmentation module 460 may determine a position where the virtual object is to be placed in the virtual space, based on the position information of the virtual object included in the virtual object data, and place the virtual object at the determined position. In addition, according to an embodiment of the disclosure, the augmentation module 460 may determine a position where the virtual object is to be placed in the virtual space, based on the items arranged in the virtual space and the context information of the virtual object, and place the virtual object at the determined position.

### (4) Generating training data through simulation

Once the virtual object is augmented in the virtual space, a training data generation module 470 may generate training data through simulation using a virtual robot vacuum cleaner. According to an embodiment of the disclosure, the training data generation module 470 may execute a simulation so that a virtual robot vacuum cleaner performs a cleaning operation or a scanning operation (e.g., capturing images with a camera while traveling) in the virtual space where the virtual object is placed. The training data generation module 470 may generate training data for training the recognition model 241 by using an image the virtual object captured in the virtual space by the virtual robot vacuum cleaner (hereinafter referred to as a "virtual captured image" or a "synthetic image").

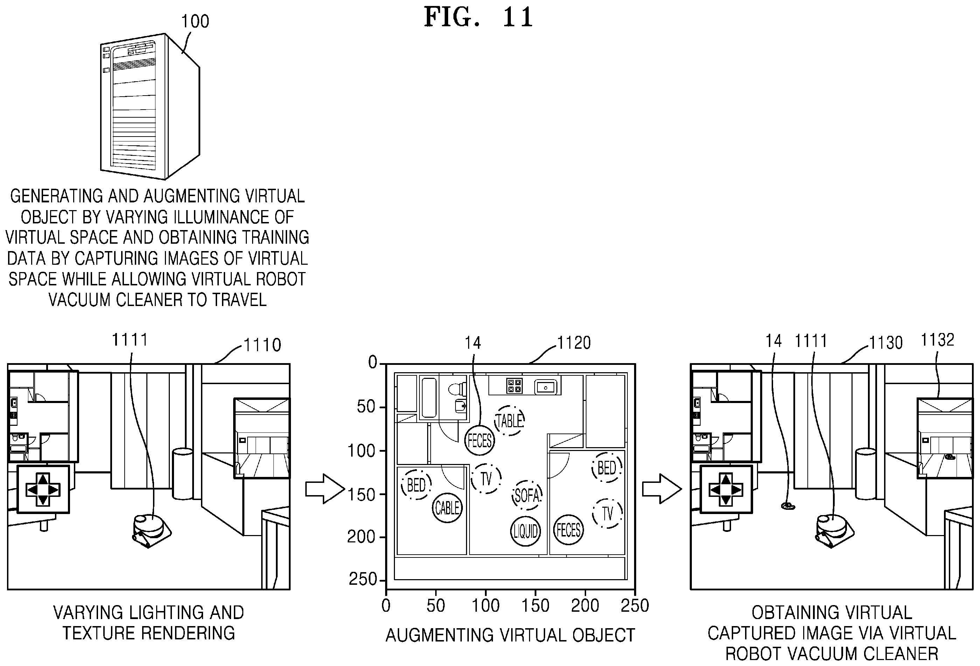

A process in which the training data generation module 470 generates training data is described in detail with reference to FIG. 11.

A first image 1110 of FIG. 11 is an image showing a situation in which a virtual robot vacuum cleaner 1111 is placed in a virtual space generated by the virtual space generation module 440 of the server 100. The training data generation module 470 may place the virtual robot vacuum cleaner 1111 in the virtual space for simulation. Referring to the first image 1110 of FIG. 11, the virtual space generation module 440 may change lighting or texture rendering for the virtual space in various ways before executing a simulation. As described above, the virtual space generation module 440 may adjust the illuminance of the virtual space based on the illuminance characteristic information about the target space. Furthermore, the virtual space generation module 440 may adjust a background of the virtual space (e.g., patterns, textures, colors, color distribution, tones (white tone, wood tone, etc.), etc. of the floor or wallpaper) based on information about the background of the space included in the spatial information. By allowing the virtual space generation module 440 to vary the lighting or texture rendering for the virtual space, various environments that may appear in the rear-world target space may be generated in the virtual space.

A second image 1120 of FIG. 11 is an image for illustrating a process in which the augmentation module 460 augments the virtual object 14 in the virtual space. As described above, the virtual object data output by the virtual object generation model 450 may include information about the position of the virtual object 14 expressed as coordinates on a 2D top view image of the target space, and accordingly, the augmentation module 460 may locate and place the virtual object 14 in the virtual space realized identically or similarly to the target space.

Alternatively, the augmentation module 460 may augment a virtual object in the virtual space according to any of the various methods described above.

A third image 1130 of FIG. 11 is an image showing a situation in which the virtual robot vacuum cleaner 1111 obtains a virtual captured image (synthetic data) with the virtual object 14 augmented in the virtual space. The training data generation module 470 may execute a simulation so that the virtual robot vacuum cleaner 1111 performs a cleaning operation or a scanning operation in the virtual space where the virtual object 14 is placed. When the simulation is executed, the virtual robot vacuum cleaner 1111 may obtain a virtual captured image 1132 by performing image capturing while traveling in the virtual space. The training data generation module 470 may generate training data by labeling the virtual captured image 1132 with a class (feces) of the virtual object 14.

In this way, the training data generation module 470 may efficiently obtain training data for various situations by generating synthetic data (virtual captured images) through the virtual space and generating training data by using the synthetic data.

According to an embodiment of the disclosure, the training data generation module 470 may generate training data by selecting some of the synthetic images collected through the simulation. For example, the training data generation module 470 may perform a test on a synthetic image by using the recognition model 490 and determine whether to use the synthetic image as training data according to a test result. The recognition model 490 used in the test may be the same model as the recognition model 241 embedded in the robot vacuum cleaner 200, or may be a base recognition model commonly loaded on all devices (all robot vacuum cleaners) at the factory.

In detail, the training data generation module 470 may attempt object recognition on synthetic images, which are obtained through the simulation, by using the recognition model 490, and determine whether the object recognition is successful. The training data generation module 470 may generate training data by adjusting a ratio between the number of synthetic images in which the recognition model 490 succeeds in object recognition and the number of synthetic images in which the recognition model 490 fails in object recognition to a preset value. For example, the training data generation module 470 may perform an object recognition test on initially collected synthetic images and select synthetic images so that a ratio of the number of synthetic images for which a test result is "success" to the number of synthetic images for which a test result is "failure" is a preset ratio (e.g., 1:1, 10:1, or the like). Subsequently, the training data generation module 470 may generate training data by labeling the selected synthetic images with classes of virtual objects included therein.

In other words, the training data generation module 470 may determine whether to utilize each synthetic image as training data through an object recognition test using the recognition model 490, and when determining to utilize the synthetic image as training data, generate training data by labeling the synthetic image with a class of the virtual object.

When only synthetic images in which the recognition model 490 succeeds in object recognition are included in the training data, or, conversely, when only synthetic images in which the recognition model 490 fails in object recognition are included in the training data, problems of overfitting or underfitting may occur. The training data generation module 470 may achieve data balance by adjusting the number of synthetic images with a test result of "success" and the number of synthetic images with a "failure" test result in a certain ratio, thereby increasing the training efficiency of the recognition model 490.

According to an embodiment of the disclosure, when a failure event occurs while the virtual robot vacuum cleaner 1111 is performing a cleaning operation in the virtual space, the training data generation module 470 may generate training data by using a synthetic image captured of the failure event.

Moreover, the training data generation module 470 may also generate training data by using captured images included in the failure log data. Such training data based on real data and training data based on synthetic data may be used together to train the recognition model 490.

6. Fine-tuning a recognition model by using generated training data.

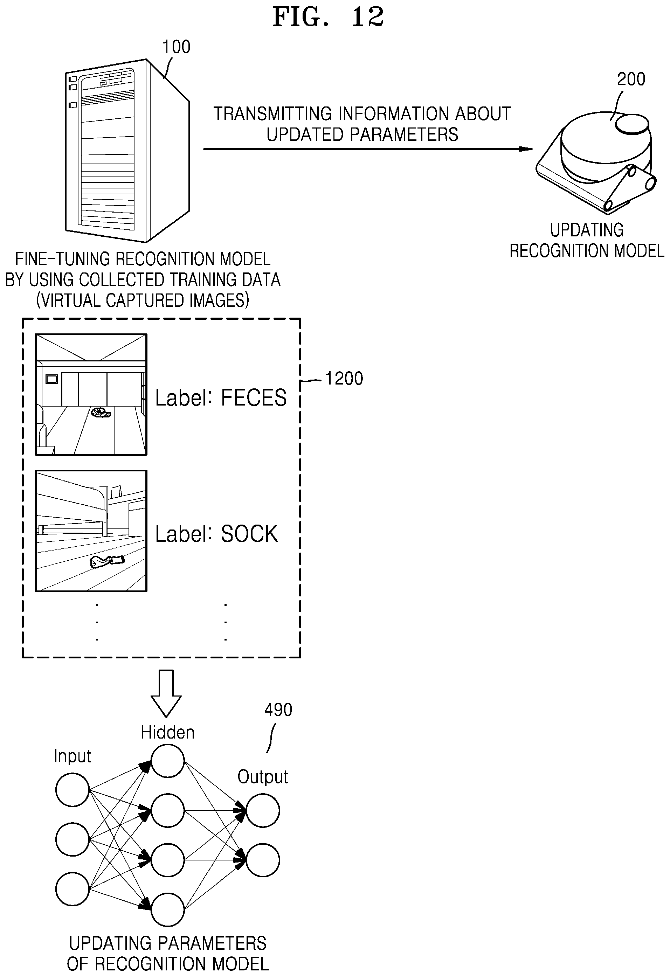

FIG. 12 is a diagram illustrating an operation in which the server 100 performs fine-tuning on a recognition model by using training data and updates the recognition model of a robotic mobile device according to a fine-tuning result, according to an embodiment of the disclosure.

Referring to FIG. 12, a fine-tuning module 480 of the server 100 may fine-tune the recognition model 490 by using training data 1200 output from the training data generation module 470. In this case, the recognition model 490 may be the same recognition model as the recognition model 241 in the robot vacuum cleaner 200 or may be a recognition model commonly used for all devices.

According to an embodiment of the disclosure, the fine-tuning module 480 may update parameters of the recognition model 490 by further training the recognition model 490 through supervised learning using training data labeled with ground truth (class of an object).

### 7. Updating a recognition model of a robot vacuum cleaner based on a fine-tuned recognition model.

When the fine-tuning (additional training) of the recognition model 490 is completed, the server 100 may request an update of the recognition model 241 while transmitting the updated parameter information of the recognition model 490 to the robot vacuum cleaner 200 via the communication module 410. The robot vacuum cleaner 200 may update the recognition model 241 according to the received parameter information.

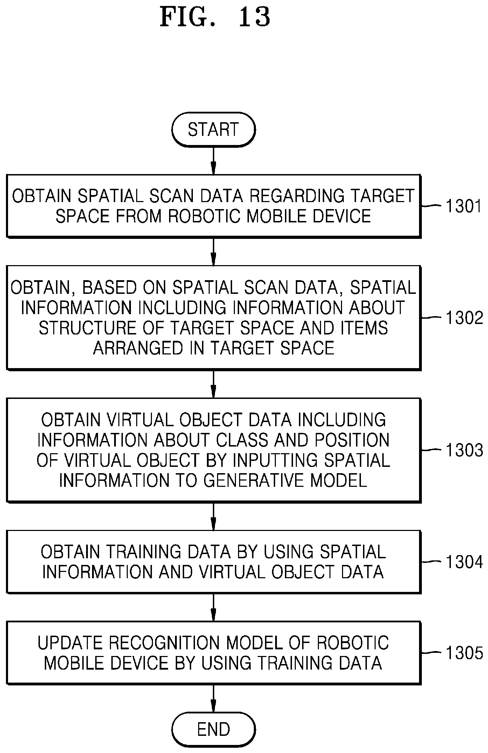

A method of updating a recognition model of a robotic mobile device according to one or more embodiments of the disclosure is described with reference to FIGS. 13 to 18. Because operations included in flowcharts of FIGS. 13 to 18 are performed by the server 100 of FIGS. 1 and 2, descriptions already provided with reference to FIGS. 1 to 12 may be equally applicable to FIGS. 13 to 18 even when omitted below.

Referring to FIG. 13, in operation 1301, the server 100 may obtain spatial scan data regarding a target space from a robotic mobile device. According to an embodiment of the disclosure, upon initial startup or upon reset, the robotic mobile device may ask a user whether to update a recognition model, and start updating the recognition model when the user agrees on the update. According to an embodiment of the disclosure, when a failure event for the robotic mobile device occurs, the robotic mobile device may start updating the recognition model automatically or with the user's consent. When the update of the recognition model of the robotic mobile device starts, the robotic mobile device may collect spatial scan data by scanning the target space via sensors (a camera, a LiDAR sensor, etc.) provided therein and transmit the spatial scan data to the server 100. The spatial scan data may include map data (e.g., LiDAR scan data) collected via the LiDAR sensor of the robotic mobile device and a captured image obtained via the camera.

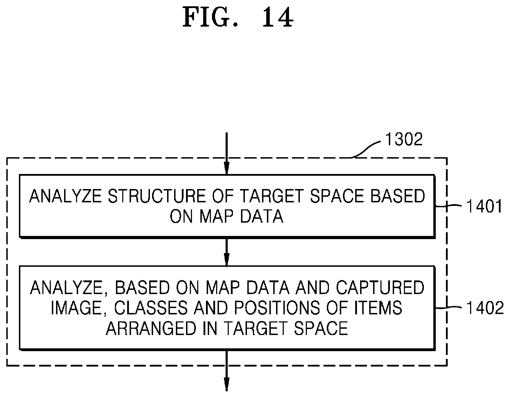

In operation 1302, the server 100 may obtain, based on the spatial scan data, spatial information including information about a structure of the target space and items arranged in the target space. Detailed operations included in operation 1302 are illustrated in FIG. 14.

Referring to FIG. 14, in operation 1401, the server 100 may analyze a structure of the target space based on the map data included in the space scan data.

In operation 1402, the server 100 may analyze, based on the map data and the captured image included in the spatial scan data, classes and positions of items arranged in the target space.

According to an embodiment of the disclosure, the server 100 may analyze a background of the target space based on the captured image included in the spatial scan data.

According to an embodiment of the disclosure, the server 100 may obtain illuminance characteristic information about the target space based on the spatial scan data. For example, the server 100 may determine a color temperature distribution and a brightness distribution in the target space by analyzing captured images included in the spatial scan data.

Referring back to FIG. 13, in operation 1303, the server 100 may obtain virtual object data including information about a class and a position of a virtual object by inputting the spatial information to a generative model (a virtual object generation model). According to an embodiment of the disclosure, the generative model may be a neural network model trained using a type of a failure event that occurred in the target space, a location where the failure event occurred, and the spatial information of the target space, and the failure event may be an event where the recognition model of the robotic mobile device fails to recognize an object. Furthermore, the virtual object may be an object for which a probability that the recognition model of the robotic mobile device fails to recognize in the target space is greater than or equal to a preset threshold.

According to an embodiment of the disclosure, by learning a relationship between characteristics of a space (e.g., structure of the space, arrangement of items in the space, etc.) and an object that causes a failure, the generative model may generate and output data about a virtual object that is likely to cause a failure when taking the spatial information as input. Descriptions of training of and inference by the generative model (generation of the virtual object) have already been provided with reference to FIGS. 6 and 10. Moreover, according to an embodiment of the disclosure, the virtual object data may further include context information that is information about nearby items related to the virtual object.

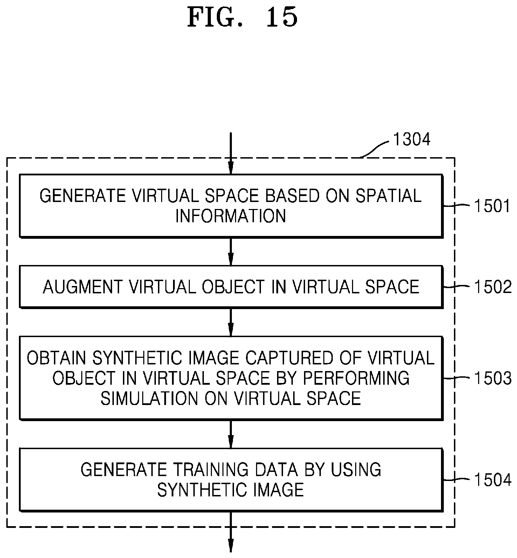

In operation 1304, the server 100 may obtain training data by using the spatial information and the virtual object data. Detailed operations included in operation 1304 are illustrated in FIG. 15.

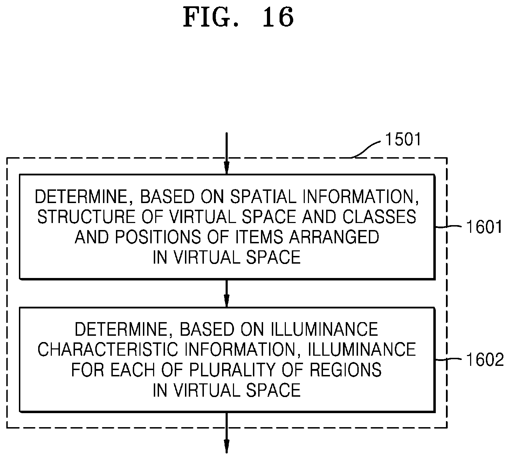

Referring to FIG. 15, in operation 1501, the server 100 may generate a virtual space based on the spatial information. Detailed operations included in operation 1501 are illustrated in FIG. 16.

Referring to FIG. 16, in operation 1601, the server 100 may determine, based on the spatial information, a structure of a virtual space and classes and positions of items arranged in the virtual space. The spatial information may include information about the structure of the target space, and the server 100 may generate a structure of the virtual space by reflecting the structure of the target space. For example, the server 100 may generate a structure of the virtual space, which is identical to the structure of the target space, or generate a structure of the virtual space by maintaining structural characteristics of the target space while changing the details. The spatial information may include information about the classes and positions of the items arranged in the target space, and the server 100 may arrange items in the virtual space by reflecting the classes and positions of the items arranged in the target space. For example, the server 100 may arrange the items in the same manner as in the target space, or arrange the items in the target space by maintaining characteristics of the arrangement of the items in the target space while changing the details.

In operation 1602, the server 100 may determine illuminance for each of a plurality of regions in the virtual space based on the illuminance characteristic information about the target space. According to an embodiment of the disclosure, the virtual space generation module 440 may determine a corresponding region of the target space for each of the plurality of regions included in the virtual space, and may apply color temperature and brightness of the corresponding region of the target space as is to the virtual space, or adjust the color temperature and brightness of the region of the target space by a certain rate and apply a result of the adjustment to the virtual space.

According to an embodiment of the disclosure, the server 100 may adjust a background of the virtual space by reflecting information about the background of the target space included in the spatial information.

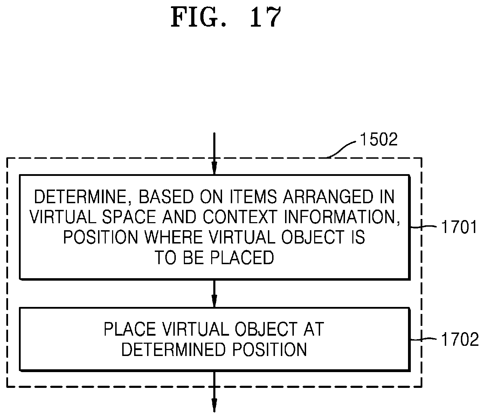

Referring back to FIG. 15, in operation 1502, the server 100 may augment the virtual object in the virtual space. Detailed operations included in operation 1502 are illustrated in FIG. 17.

Referring to FIG. 17, in operation 1701, the server 100 may determine, based on the items arranged in the virtual space and context information, a position where the virtual object is to be placed, and then in operation 1702, the server 100 may place the virtual object at the determined position.

The virtual object data may include information about the position of the virtual object, and the position of the virtual object may be represented by coordinate information on a 2D top view image of the target space. In addition, the structure of the virtual space may be generated to be identical to or similar to the structure of the target space. Therefore, according to an embodiment of the disclosure, the server 100 may identify a position in the virtual space, which corresponds to a position on the 2D top view image of the target space, and place the virtual object at the identified position.

The virtual object data may also include the context information, which is information about items that are likely to be located in the vicinity of the virtual object. Thus, the server 100 may determine, based on the items arranged in the virtual space and the context information included in the virtual object data, a position where the virtual object is to be placed in the virtual space.

Referring back to FIG. 15, in operation 1503, the server 100 may perform a simulation of the virtual space to obtain a synthetic image of the virtual object captured in the virtual space. According to an embodiment of the disclosure, the server 100 may execute a simulation to cause the virtual robotic mobile device to perform a scanning operation (e.g., capturing images with a camera while traveling) in the virtual space, thereby obtaining an image (a synthetic image) of the virtual object captured by the virtual robotic mobile device.

In operation 1504, the server 100 may generate training data by using the synthetic image. According to an embodiment of the disclosure, the server 100 may generate training data by labeling the synthetic image with a class of the virtual object.

Furthermore, according to an embodiment of the disclosure, the server 100 may perform object recognition on the synthetic image by using a recognition model embedded in the server 100, determine whether the object recognition is successful, and then determine whether to use the synthetic image as training data based on a result of the determination. When it is determined that the synthetic image is to be used as training data, the server 100 may generate training data by labeling the synthetic image with a class of virtual object.

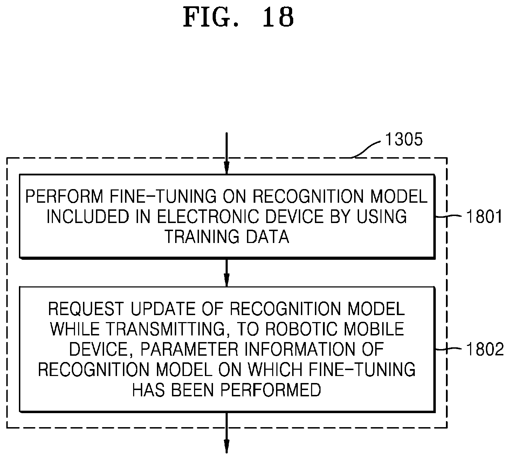

Referring back to FIG. 13, in operation 1305, the server 100 may update the recognition model of the robotic mobile device by using the training data. Detailed operations included in operation 1305 are illustrated in FIG. 18.

Referring to FIG. 18, in operation 1801, the server 100 may perform fine-tuning on the recognition model included in an electronic device (the server 100) by using the training data.

In operation 1802, the server 100 may request an update of the recognition model while transmitting, to the robotic mobile device, parameter information of the recognition model on which the fine-tuning has been performed. The robotic mobile device may update, based on the received parameter information the recognition model embedded in the robotic mobile device itself.

According to one or more embodiments of the disclosure described above, by updating a recognition model of a robotic mobile device to be optimized for a target space where the robotic mobile device is used, high recognition performance in the target space may be achieved. Furthermore, according to one or more embodiments of the disclosure, by obtaining training data by using a virtual object generated by reflecting a real failure event, it is possible to efficiently obtain training data for various situations.

A method of updating a recognition model of a robotic mobile device, according to an embodiment of the disclosure, may include obtaining, by an electronic device, from the robotic mobile device, spatial scan data regarding a target space, obtaining, by the electronic device, based on the spatial scan data, spatial information including information about a structure of the target space and items arranged in the target space, obtaining, by the electronic device, virtual object data including information about a class and a position of a virtual object by inputting the spatial information to a generative model, obtaining, by the electronic device, training data by using the spatial information and the virtual object data, and updating, by the electronic device, the recognition model of the robotic mobile device by using the training data.

According to an embodiment of the disclosure, the spatial scan data may include map data obtained by scanning the target space by using a LiDAR sensor and an image of the target space captured by using a camera.

According to an embodiment of the disclosure, the obtaining of the spatial information may include analyzing, by the electronic device, a structure of the target space based on the map data and analyzing, by the electronic device, based on the map data and the captured image, classes and positions of items arranged in the target space.

According to an embodiment of the disclosure, the generative model may be a neural network model trained using a type of a failure event that occurred in the target space, a location where the failure event occurred, and the spatial information of the target space, and the failure event may be an event where the recognition model of the robotic mobile device fails to recognize an object.

According to an embodiment of the disclosure, the virtual object may be an object for which a probability that the recognition model of the robotic mobile device fails to recognize in the target space is greater than or equal to a preset threshold.

According to an embodiment of the disclosure, the obtaining of the training data may include generating, by the electronic device, a virtual space based on the spatial information, augmenting, by the electronic device, the virtual object in the virtual space, obtaining, by the electronic device, a synthetic image of the virtual object captured in the virtual space by performing a simulation on the virtual space, and generating, by the electronic device, training data by using the synthetic image.

According to an embodiment of the disclosure, the obtaining of the spatial information may include obtaining, by the electronic device, illuminance characteristic information about the target space based on the spatial scan data, and the generating of the virtual space may include determining, by the electronic device, based on the spatial information, a structure of the virtual space and classes and positions of items arranged in the virtual space, and determining, by the electronic device, illuminance for each of a plurality of regions in the virtual space based on the illuminance characteristic information.

According to an embodiment of the disclosure, the virtual object data may further include context information that is information about nearby items related to the virtual object, and the augmenting of the virtual object may include determining, by the electronic device, based on the items arranged in the virtual space and the context information, a position where the virtual object is to be placed and placing, by the electronic device, the virtual object at the determined position.

According to an embodiment of the disclosure, the generating of the training data by using the synthetic image may include generating the training data by labeling the synthetic image with a class of the virtual object.

According to an embodiment of the disclosure, the generating of the training data by using the synthetic image may include performing object recognition on the synthetic image by using the recognition model, determining whether the object recognition is successful, determining whether to use the synthetic image as the training data based on a result of the determination, and when it is determined that the synthetic image is to be used as the training data, generating the training data by labeling the synthetic image with the class of the virtual object.

According to an embodiment of the disclosure, the updating of the recognition model of the robotic mobile device may include performing, by the electronic device, fine-tuning on a recognition model included in the electronic device by using the training data, and requesting, by the electronic device, an update of the recognition model by transmitting, to the robotic mobile device, parameter information of the recognition model on which the fine-tuning has been performed.

An electronic device for updating a recognition model of a robotic mobile device, according to an embodiment of the disclosure, may include memory storing a program or at least one instruction for updating the recognition model, and at least one processor configured to execute the program or at least one instruction to cause the electronic device to obtain spatial scan data regarding a target space from the robotic mobile device, obtain, based on the spatial scan data, spatial information including information about a structure of the target space and items arranged in the target space, obtain virtual object data including information about a class and a position of a virtual object by inputting the spatial information to a generative model, obtain training data by using the spatial information and the virtual object data, and update the recognition model of the robotic mobile device by using the training data.

According to an embodiment of the disclosure, the spatial scan data may include map data obtained by scanning the target space by using a LiDAR sensor and an image of the target space captured by using a camera.

According to an embodiment of the disclosure, in the obtaining of the spatial information, the electronic device may be configured to analyze a structure of the target space based on the map data and then analyze, based on the map data and the captured image, classes and positions of items arranged in the target space.

According to an embodiment of the disclosure, the generative model may be a neural network model trained using a type of a failure event that occurred in the target space, a location where the failure event occurred, and the spatial information of the target space, and the failure event may be an event where the recognition model of the robotic mobile device fails to recognize an object.

According to an embodiment of the disclosure, the virtual object may be an object for which a probability that the recognition model of the robotic mobile device fails to recognize in the target space is greater than or equal to a preset threshold.

According to an embodiment of the disclosure, in the obtaining of the training data, the electronic device may be configured to generate a virtual space based on the spatial information, augment the virtual object in the virtual space, obtain a synthetic image of the virtual object captured in the virtual space by performing a simulation on the virtual space, and generate training data by using the synthetic image.

According to an embodiment of the disclosure, the at least one processor may be further configured to execute the program or at least one instruction to cause the electronic device to obtain illuminance characteristic information about the target space based on the spatial scan data, and in the generating of the virtual space, the electronic device may be configured to determine, based on the spatial information, a structure of the virtual space and classes and positions of items arranged in the virtual space, and then determine illuminance for each of a plurality of regions in the virtual space based on the illuminance characteristic information.

According to an embodiment of the disclosure, the virtual object data may further include context information that is information about nearby items related to the virtual object, and in the augmenting of the virtual object, the electronic device may be configured to determine, based on the items arranged in the virtual space and the context information, a position where the virtual object is to be placed and then place the virtual object at the determined position.

One or more embodiments of the disclosure may be implemented or supported by one or more computer programs that may be created from computer-readable program code and included on computer-readable media. As used herein, the terms "application" and "program" may refer to one or more computer programs, software components, instruction sets, procedures, functions, objects, classes, instances, associated data, or parts thereof suitable for implementation in computer-readable program code. The "computer-readable program code" may include various types of computer code, including source code, object code, and executable code. The "computer-readable media" may include various types of media that are accessible by a computer, such as ROM, RAM, hard disk drives (HDDs), CDs, DVDs, or various other types of memory.

Furthermore, a machine-readable storage medium may be provided in the form of a non-transitory storage medium. Here, the "non-transitory storage medium" is a tangible device and may exclude wired, wireless, optical, or other communication links that transmit transient electrical or other signals. Moreover, the term "non-transitory storage medium" does not differentiate between where data is semi-permanently stored in the storage medium and where the data is temporarily stored in the storage medium. For example, the "non-transitory storage medium" may include a buffer for temporarily storing data. The computer-readable media may be any available media that are accessible by a computer and include both volatile and nonvolatile media and both removable and non-removable media. The computer-readable media include media on which data may be permanently stored and media on which data may be stored and overwritten later, such as rewritable optical disks or erasable memory devices.

According to an embodiment of the disclosure, methods according to one or more embodiments of the disclosure set forth herein may be included in a computer program product when provided. The computer program product may be traded, as a product, between a seller and a buyer. The computer program product may be distributed in the form of a machine-readable storage medium (e.g., compact disc ROM (CD-ROM)) or distributed (e.g., downloaded or uploaded) on-line via an application store or directly between two user devices (e.g., smartphones). For online distribution, at least a part of the computer program product (e.g., a downloadable app) may be at least transiently stored or temporally generated in the machine-readable storage medium such as memory of a server of a manufacturer, a server of an application store, or a relay server.

The above description of the disclosure is provided for illustration, and it will be understood by those of ordinary skill in the art that changes in form and details may be readily made therein without departing from technical idea or essential characteristics of the disclosure. For example, adequate effects may be achieved even when the above-described techniques are performed in a different order than that described above, and/or the aforementioned components of the systems, structures, devices, circuits, etc. are coupled or combined in different forms and modes than those described above or are replaced or supplemented by other components or their equivalents. Accordingly, the above-described embodiments of the disclosure and all aspects thereof are merely examples and are not limiting. For example, each component defined as an integrated component may be implemented in a distributed fashion, and likewise, components defined as separate components may be implemented in an integrated form.

The scope of the disclosure is defined not by the detailed description thereof but by the following claims, and all the changes or modifications within the meaning and scope of the appended claims and their equivalents will be construed as being included in the scope of the disclosure.

## Claims

1. A method of updating a recognition model of a robotic mobile device, the method comprising:
obtaining, by an electronic device (100), from the robotic mobile device (200), spatial scan data regarding a target space;
obtaining, by the electronic device (100), based on the spatial scan data, spatial information comprising information about a structure of the target space and an item in the target space;
obtaining, by the electronic device (100), virtual object data comprising information about a class of a virtual object and a position of the virtual object by inputting the spatial information to a generative model;
obtaining, by the electronic device (100), training data by using the spatial information and the virtual object data; and
updating, by the electronic device (100), the recognition model of the robotic mobile device (200) by using the training data.

2. The method of claim 1, wherein the spatial scan data comprises an image of the target space captured by using a camera (250) and map data obtained by scanning the target space using a light detection and ranging (LiDAR) sensor (260).

3. The method of claim 1 or 2, wherein the obtaining the spatial information comprises:
analyzing, by the electronic device (100), the structure of the target space based on the map data; and
analyzing, by the electronic device (100), a class and a position of the item in the target space based on the map data and the image of the target space.

4. The method of any one of claims 1 to 3,
wherein the generative model comprises a neural network model trained using a type of a failure event that occurred in the target space, a location where the failure event occurred, and the spatial information, and
wherein the failure event comprises an event in which the recognition model fails to recognize an object.

5. The method of any one of claims 1 to 4, wherein the virtual object is an object for which a probability that the recognition model will fail to recognize in the target space is greater than or equal to a preset threshold.

6. The method of any one of claims 1 to 5, wherein the obtaining the training data comprises:
generating, by the electronic device (100), a virtual space based on the spatial information;
augmenting, by the electronic device (100), the virtual object in the virtual space;
obtaining, by the electronic device (100), a synthetic image of the virtual object captured in the virtual space by performing a simulation of the virtual space; and
generating, by the electronic device (100), the training data using the synthetic image.

7. The method of any one of claims 1 to 6,
wherein the obtaining the spatial information comprises obtaining, by the electronic device (100), illuminance characteristic information about the target space based on the spatial scan data, and
wherein the generating the virtual space comprises:
determining, by the electronic device (100), a structure of the virtual space, the class of the item, and the position of the item in the virtual space based on the spatial information; and
determining, by the electronic device (100), illuminance for each of a plurality of regions in the virtual space based on the illuminance characteristic information.

8. The method of any one of claims 1 to 7,
wherein the virtual object data further comprises context information regarding nearby items related to the virtual object, and
wherein the augmenting the virtual object comprises:
determining, by the electronic device (100), a position in the virtual space where the virtual object is to be placed based on the item in the virtual space and the context information; and
placing, by the electronic device (100), the virtual object at the determined position in the virtual space.

9. The method of any one of claims 1 to 8, wherein the generating the training data using the synthetic image comprises labeling the synthetic image with the class of the virtual object.

10. The method of any one of claims 1 to 9, wherein the generating the training data using the synthetic image comprises:
performing object recognition on the synthetic image using the recognition model;
determining whether the object recognition is successful;
determining whether to use the synthetic image as the training data based on a result of the determining whether the object recognition is successful; and
based on determining to use the synthetic image as the training data, generating the training data by labeling the synthetic image with the class of the virtual object.

11. An electronic device (100) for updating a recognition model of a robotic mobile device (200), the electronic device comprising:
memory (130) storing a program or at least one instruction; and
at least one processor (120) operatively coupled to the memory (130),
wherein the program or the at least one instruction, when executed by the at least one processor (120), causes the electronic device (100) to:
obtain spatial scan data regarding a target space from the robotic mobile device (200),
obtain, based on the spatial scan data, spatial information comprising information about a structure of the target space and an item in the target space,
obtain virtual object data comprising information about a class of a virtual object and a position of the virtual object by inputting the spatial information to a generative model,
obtain training data by using the spatial information and the virtual object data, and
update the recognition model of the robotic mobile device (200) by using the training data.

12. The electronic device of claim 11, wherein the spatial scan data comprises an image of the target space captured by using a camera and map data obtained by scanning the target space using a light detection and ranging (LiDAR) sensor (260).

13. The electronic device of claim 11 or 12, wherein the program or the at least one instruction, when executed by the at least one processor (120), cause the electronic device (100) to obtain the spatial information by:
analyzing a structure of the target space based on the map data, and
analyzing, based on the map data and the image of the target space, a class and a position of the item in the target space.

14. The electronic device of any one of claims 11 to 13,
wherein the generative model comprises a neural network model trained using a type of a failure event that occurred in the target space, a location where the failure event occurred, and the spatial information, and
wherein the failure event comprises an event in which the recognition model fails to recognize an object .

15. The electronic device of any one of claims 11 to 14, wherein the program or the at least one instruction, when executed by the at least one processor (120), cause the electronic device (100) to obtain the training data by:
generating a virtual space based on the spatial information,
augmenting the virtual object in the virtual space,
obtaining a synthetic image of the virtual object captured in the virtual space by performing a simulation on the virtual space, and
generating the training data by using the synthetic image.
